(19) Europäisches Patentamt
European Patent Office
Office européen des brevets

(11) **EP 1 860 485 A1**

(12) **EUROPEAN PATENT APPLICATION**
published in accordance with Art. 158(3) EPC

(43) Date of publication:
**28.11.2007 Bulletin 2007/48**

(51) Int Cl.:
**G02F 1/015** (2006.01)   **G02B 26/00** (2006.01)

(21) Application number: **05784422.7**

(22) Date of filing: **03.03.2005**

(86) International application number:
**PCT/RU2005/000090**

(87) International publication number:
**WO 2006/093425 (08.09.2006 Gazette 2006/36)**

(84) Designated Contracting States:
**AT BE BG CH CY CZ DE DK EE ES FI FR GB GR HU IE IS IT LI LT LU MC NL PL PT RO SE SI SK TR**

(71) Applicant: **Guscho, Yury Petrovich**
**Moscow, 11574 (RU)**

(72) Inventor: **Guscho, Yury Petrovich**
**Moscow, 11574 (RU)**

(74) Representative: **Fischer, Franz**
**IPTO S.A.**
**Lorrainestrasse 4**
**Postfach 594**
**CH-3000 Bern 25 (CH)**

(54) **OPTICAL RADIATION MODULATION METHOD, AN ELECTROOPTICAL MODULATOR (VARIANTS) AND AN ELECTROOPTICAL DEVICE (VARIANTS)**

(57)    The invention is related to modulation of light by the controlling of intensity and phase characteristics of a light radiation with the help of using of relief-phase deformations and surface plasmon resonance effect.

It is achieved by a combination of advantages of the relief-phase record and the surface plasmon resonance effect. The technical result, reachable at realization of the offered invention, consists in increase of a efficiency of control of the optical radiation, due to an opportunity of the full deviation (switching) of radiation from the main optical axis at the switching on an input electric signal. The «valvate effect» which is achieved here allows to increase sensitivity, contrast and the resolution of the processable optical information.

For the first time the opportunity of dynamic control of the surface plasmon resonance effect both in prismatic and in grating is received. The offered method and the modulator can be used, in particular, in nanotechnology as the high-sensitivity sensor reacting to change of properties of the dielectric medium in real time.

The invention can be applied also in the optical-mechanical industry, high-sensitive and high-resolution sensors control of gas, liquid and firm dielectric mediums (in biology, chemistry, etc.), projection and display TV, printing and communication facility, light fiber switching and light filtering devices, high-speed linear and matrix printers, as tunable diffractional grating and in other areas of technics.

Fig.1

**EP 1 860 485 A1**

## Description

### Area of application

The invention is related to modulation of light by the controlling of intensity and phase characteristics of a light radiation with the help of using of relief-phase deformations and surface plasmon resonance effect. The invention can be applied in the optical-mechanical industry, high-sensitive and high-resolution sensors control of gas, liquid and firm dielectric mediums (in biology, chemistry, etc.), projection and display TV, printing and communication facility, light fiber switching and light filtering devices, high-speed linear and matrix printers, as tunable diffractional grating and in other areas of technics.

### Prior Art

There is a known method of modulation of the optical radiation: the modulated optical radiation is directed on a surface of the deformable dielectric layer and modulation of optical radiation is carried out by the variation of an incidence angle of optical radiation due to its deformation as a result of influence of an external electric field (RU 2230348 C1, published 10.06.2004).

The disadvantages of the given method are low depth of modulation of optical radiation and linearity of dependence of modulation of radiation from an entrance signal.

There is another known method of modulation of the optical radiation, which is the nearest analogue to our invention: the modulated optical radiation is directed on a surface of the reflecting metal layer located on boundary surface between the two deformable dielectric layers with different or equal permittivity, and at least one of deformable dielectric layers is made transparent for the modulated optical radiation. The modulation of optical radiation is carried out by the variation of an incidence angle of optical radiation 1 on the metal layer 2 due to deformation of the metal layer 2 as a result of influence of an external field on boundary surface (RU 2143127 C1, published 20.12.1999).

The disadvantages of the given method are the same: low depth of modulation of optical radiation and linearity of dependence of modulation of radiation from an entrance signal.

There is known the electrooptical modulator which is made with an opportunity of change of a direction of distribution of modulated optical radiation and which contains the control device and also the transparent electroconductive layer and the transparent deformable dielectric layer which are located consistently on dielectric substrate and contacting among themselves, and also the electrode system located on the dielectric basis (RU 2230348 C1, published 6/10/2004).

There is known the electrooptical modulator, being the nearest analogue to both variants of the offered electrooptical modulator, made with an opportunity of change of a direction of distribution of modulated optical radiation and contains the control device and also the electroconductive layer, the first deformable transparent dielectric layer, deformable metal reflecting layer, the second deformable dielectric layer and the dielectric basis which are located consistently on dielectric substrate and contacting among themselves (RU 2143127 C1, published 20.12.1999).

Disadvantage of known electrooptical modulators is the impossibility to guarantee the valving kind of control of optical radiation that does not enable to receive high contrast. Besides, there is no opportunity of selective scanning of entrance radiation.

The closest analogue for the offered electrooptical device is the known electrooptical device which contains the illuminator, including the radiation source and the collimation objective, and at least one electrooptical modulator, the visualizer, which contains the visualizing diaphragm, and the perception device are successively located on the optical axis (RU 2143127 C1, published 20.12.1999).

Shortcoming of the given device is low contrast and resolution of the output image of the electrooptical device. The known device also cannot be used in nanotechnology for measurement of parameters of dielectric mediums.

### Concept of the invention

The technical result, reachable at realization of the offered invention, consists in increase of a efficiency of control of the optical radiation, due to an opportunity of the full deviation (switching) of radiation from the main optical axis at the switching on an input electric signal. The «valvate effect» which is achieved here allows to increase sensitivity, contrast and the resolution of the processable optical information.

It is achieved by a combination of advantages of the relief-phase record and the surface plasmon resonance effect. For the first time the opportunity of dynamic control of the surface plasmon resonance effect both in prismatic and in grating is received. The offered method and the modulator can be used, in particular, in nanotechnology as the high-sensitivity sensor reacting to change of properties of the dielectric medium in real time.

The specified technical result is achieved by the method of modulation of the optical radiation in which the modulated optical radiation 1 is directed on a surface of the metal layer 2 located on boundary surface between the first deformable dielectric layer 3 and the second deformable dielectric layer 4 with different or equal permittivity, and at least one of deformable dielectric layers is made transparent for the modulated optical radiation 1, and modulation of optical radiation 1 is carried out by the variation of an incidence angle of optical radiation 1 on a metal layer 2 due to deformation of a metal layer 2 as a result of influence of an external field on boundary surface, moreover, the modulated polarized optical radiation 1 is directed on a surface of a metal layer 2 under the incidence angle $\alpha$ providing occurrence of surface plasmon resonance effect, and deformation of a surface of a metal layer 2 is carried out thus, that the changing of the incidence angle $\alpha$ of optical radiation 1 on a surface of a metal layer 2 provides infringement of conditions of occurrence of surface plasmon resonance effect.

Thus occurrence of the surface plasmon resonance effect theoretically is real at all values of an incidence angles of the modulated optical radiation on a surface of the metal layer, to the corresponding values of an angular resonant curve which are distinct from zero. However for guarantee of stable modulation for occurrence of surface plasmon resonance effect an incidence angle $\alpha$ of the modulated optical radiation 1 on the metal layer 2 equal to resonance angle $\Theta$, to corresponding minimum of an angular resonance curve, with a deviation from this angle, not exceeding half-width $2\Delta\Theta$ of the angular resonance curve is provided, and the most preferably to provide a deviation of this angle, not exceeding half of half-width $\Delta\Theta$ of the angular resonance curve. For infringement of conditions of occurrence of surface plasmon resonance effect the incidence angle $\alpha$ of the modulated optical radiation 1 to a metal layer 2 is changed so that incidence angle was outside of a range of angles ($\Theta \pm \Delta\Theta$), i.e. so that an incidence angle $\alpha$ of the modulated optical radiation is more ($\Theta+\Delta\Theta$) or less ($\Theta-\Delta\Theta$). Thus it is preferably to change an incidence angle $\alpha$ of the modulated optical radiation 1 onto the metal layer 2 so that an incidence angle is outside of a range of angles ($\Theta \pm \Delta\Theta$), and it is more preferably - outside of a range of incidence angles at which the angular resonant curve has the values which are distinct from zero.

And, the modulated optical radiation 1 is directed on a surface of a deformable metal layer 2 from the first deformable dielectric layer 3 which is made transparent, or from the second deformable layer 4 which is made transparent.

Besides as the external field influencing upon a metal layer 2, for example, a modulated electric field can be used.

Thus as the second dielectric layer the gaseous or liquid dielectric medium, for example, air can be used.

Besides it the technical result is that in the first variant the electrooptical modulator is made with an opportunity of change of a direction of distribution of the modulated optical radiation 1, contains the control device 6 and the electroconductive layer 8, the first deformable dielectric layer 3, the deformable metal layer 2, the second deformable dielectric layer 4, the electrode system 9 and the dielectric basis 10, which are located consistently on dielectric substrate 7 and contacting among themselves, in addition the electrode system 9, the deformable metal layer 2 and the electroconductive layer 8 are connected electrically to the control device 6, and the dielectric substrate 7, the electroconductive layer 8, the first deformable dielectric layer 3 are made transparent for used optical radiation, and/or a dielectric basis 10, the electrode system 9, the second deformable dielectric layer 4 are made transparent for the used optical radiation 1, and the electrooptical modulator 5 is made with an opportunity of excitation of surface plasmon resonance effect at falling the modulated optical radiation 1 onto the deformable metal layer 2 under the angle $\alpha$ providing occurrence of surface plasmon resonance effect for the given electrooptical modulator 5, and with an opportunity of the termination of surface plasmon resonance effect due to change of an incidence angle of the modulated optical radiation 1 onto the deformable metal layer 2 as a result of deformation of a metal layer 2 due to change of the electric signal inputted onto the electrode system 9 from control device 6.

Thus as already it was specified above, it is expediently, that the electrooptical modulator has been made with an opportunity of guaranteeing of an incidence angle of the modulated polarized optical radiation onto the deformable metal layer. This angle equals to the resonance angle $\Theta$ corresponding to a minimum of an angular resonant curve for the given electrooptical modulator with a deviation from this angle, not exceeding of half-width $2\Delta\Theta$ of the mentioned angular resonance curve, but it is the most preferable - not exceeding half of half-width $\Delta\Theta$ of the angular resonance curve.

Besides, it is expediently, that the changing of the electric signal inputted on the electrode system from the control device for the termination of the surface plasmon resonance effect to provide such deformation of the metal layer, that the incidence angle $\alpha$ of the modulated optical radiation onto the deformable metal layer was outside of a range of angles ($\Theta \pm \Delta\Theta$), i.e. so that an incidence angle $\alpha$ of the modulated optical radiation is more ($\Theta+\Delta\Theta$) or less ($\Theta-\Delta\Theta$). Thus it is preferably to change an incidence angle $\alpha$ of the modulated optical radiation 1 onto the metal layer 2 so that an incidence angle is outside of a range of angles ($\Theta \pm \Delta\Theta$), and it is more preferably - outside of a range of incidence angles at which the angular resonant curve has the values which are distinct from zero.

Thus as a transparent dielectric substrate the plane-parallel plate can be used. However in that case when radiation falls on a reflecting metal layer from the side of first dielectric layer and, hence the dielectric substrate, the electroconductive layer and the first dielectric layer are made transparent. As the specified transparent dielectric substrate the triangular prism full internal reflections can be used, and the specified electroconductive layer is located on its second side on a course of optical radiation. In this case the first side, on which the entrance optical radiation falls, is the entrance side, and a side from which the optical radiation goes out - the exit side.

In that case when radiation falls on a reflecting metal layer from the side of second dielectric layer and, hence the dielectric basis, electrode system, the second dielectric layer are made transparent. As the specified transparent dielectric basis the triangular prism full internal reflections can be also used, which the second side on a course of optical radiation contacts to the specified electrode system. The first side, on which the entrance optical radiation falls, is the entrance side, and a side from which the optical radiation goes out - the exit side.

Thus it is necessary to note, that as the second deformable dielectric layer the gaseous or liquid dielectric medium, for example, air can be used.

Besides, the technical result is achieved because in the second variant of the electrooptical modulator is made with an opportunity of change of direction of the modulated optical radiation 1, contains the control device 6 and also contains the first deformable dielectric layer 3, the deformable metal layer 2 and the second deformable dielectric layer 4 which are contacting between themselves and located on the dielectric substrate 7, and the electrode system 9 is located on a surface of the dielectric substrate 7 and contacted with the first deformable dielectric layer 3, and the dielectric substrate 7, the electrode system 9, the first deformable dielectric layer 3 are made transparent for used optical radiation 1, and-or the second deformable dielectric layer 4 (12) is made transparent for used optical radiation 1, and the electrode system 9 and the metal layer 2 are connected electrically to the control device 6, and the electrooptical modulator 5 is made with an opportunity of occurrence or termination of the surface plasmon resonance effect at falling the modulated optical radiation 1 under angle $\alpha$ on a deformable metal layer 2, due to the changing of this incidence angle $\alpha$ of modulated optical radiation 1 onto the deformable metal layer 2 as a result of deformation of the metal layer 2 due to the changing of the electric signal inputted onto the electrode system 9 from the control device 6.

Thus as already it was specified above, it is expediently, that for occurrence of the surface plasmon resonance effect the electrooptical modulator has been made with an opportunity of guaranteeing of an incidence angle of the modulated polarized optical radiation onto the deformable metal layer. This angle equals to the resonance angle $\Theta$ corresponding to a minimum of an angular resonant curve for the given electrooptical modulator with a deviation from this angle, not exceeding of half-width $2\Delta\Theta$ of the mentioned angular resonance curve, but it is the most preferable - not exceeding half of half-width $\Delta\Theta$ of the angular resonance curve.

Besides, it is expediently, that the changing of the electric signal inputted on the electrode system from the control device for the termination of the surface plasmon resonance effect to provide such deformation of the metal layer, that the incidence angle $\alpha$ of the modulated optical radiation onto the deformable metal layer was outside of a range of angles ($\Theta \pm \Delta\Theta$), i.e. so that an incidence angle $\alpha$ of the modulated optical radiation is more ($\Theta+\Delta\Theta$) or less ($\Theta-\Delta\Theta$). Thus it is preferably to change an incidence angle $\alpha$ of the modulated optical radiation 1 onto the metal layer 2 so that an incidence angle is outside of a range of angles ($\Theta \pm \Delta\Theta$), and it is more preferably - outside of a range of incidence angles at which the angular resonant curve has the values which are distinct from zero.

Thus as the transparent dielectric substrate the plane-parallel plate can be used. However in that case when radiation falls onto the reflecting metal layer from the side of first dielectric layer and, hence the dielectric substrate 7, the electrode system 9 and the first deformable dielectric layer 3 are made transparent, and as a transparent dielectric substrate the triangular prism of full internal reflection 11 is used. The specified electrode system 9 is located on the second side of prism on a course of the modulated optical radiation 1. Except for that as the specified transparent dielectric substrate 7, the electrode system 9 and the first deformable dielectric layer 3 are made transparent, and as the specified transparent dielectric substrate the flat-convex lens is used, and the specified electrode system 9 is located on its flat surface.

Besides, the dielectric basis is added, for example, in the form of a flat-parallel plate which is covered by an electroconductive layer from the side turned to the deformable metal layer. The space between the electroconductive layer and the deformable metal layer is filled by the second deformable dielectric layer. The electroconductive layer is connected electrically to the control device.

In additional, as the second dielectric layer the gaseous or liquid dielectric medium is used, for example, air.

Besides, the technical result is achieved because in the first variant of the electrooptical device which contains the illuminator 13 including the radiation source 14 and the collimating objective 15, and also at least one electrooptical modulator 5, the visualizer 16 containing the visualizing diaphragm 17 and the perception device 18 which are located on optical axis consistently, and also the polarizer 19 is added in illuminator 13, and as each of electrooptical modulators 5 the electrooptical modulator is used, which is made according to the first or second variants, including their special cases of performance.

In additional, in the illuminator the first quarter-wave plate can be entered, and into a visualizer the second polarizer, the second quarter-wave plate and the Fourier-objective are entered consistently located on an optical axis. Thus the visualizing diaphragm is located in a focal plane of the Fourier-objective, and the perception device contains the objective, the analyzer of quality of wave front and the detector. The detector and the analyzer of wave front are electrically connected to the control device of the electrooptical modulator. Thus the specified control device is made with an opportunity of correction of amplitude and a phase of wave front.

In that case when the electrooptical device contains one electrooptical modulator, made by the first or second variant, including their special cases of performance, and contains as a transparent dielectric substrate a triangular prism of full internal reflection, the additional triangular prism of full internal reflection 11 is placed. Its entrance side is optically mating to an exit side of triangular prism of full internal reflection 11 of electrooptical modulators 5. The exit side is turned to the visual analyzer 16, and on its second on a course of optical radiation side the additional metal layer 25 is located. The angle between an optical axis and a perpendicular to the second side of an additional triangular prism 11 is equal to a resonance angle θ of surface plasmon resonance effect for an additional metal layer 25 and light wavelength of the illuminator 13.

The electrooptical device can contain two electrooptical modulators, each of which is made by the first or second variant and contains as a transparent dielectric substrate the triangular prism of full internal reflection. The exit side of the triangular prism of full internal reflection 11 of the first electrooptical modulator 5 is optically mating to an entrance side of the triangular prism of full internal reflection 11 of the second electrooptical modulator 5, and the exit side of this prism is located perpendicularly to the optical axis and directed to the side of a visualizer 16, and control device 6 of the first and second modulators 5 are made in the form of the uniform control block 26.

The electrooptical device can contain one electrooptical modulator and two illuminators can be in addition entered. The sources of radiation of the first, second and third illuminator 13 are made in the form of sources of radiation, accordingly, red R, green G, and blue B colour, and incidence angles of red $\alpha$R, green $\alpha$G and blue $\alpha$B radiation onto a deformable metal layer 2 of electrooptical modulators are equal, accordingly, to resonance angles $\Theta$R, $\Theta$G and $\Theta$B of angular resonance curves for each of the specified radiation with a deviation from these angles not exceeding half of half-width corresponding to the angular resonance curve. The electrooptical modulator 5 is made according to the first or second offered variants, including their special cases of performance, and contains as a transparent dielectric substrate a triangular prism of full internal reflection. Before the visualizer 16 on an optical axis the system of dichroic mirrors 27 which is made with an opportunity of a direction of radiation from all three radiation sources 14 in parallel optical axes to the visualizer 16 is located. The control device 6 of the electrooptical modulator is electrically connected to each of the radiation source 14 of the illuminator 13 and made with an opportunity of consecutive switching on red, green and blue radiation sources 14 synchronously with switching on the electrooptical modulator 5.

Thus the entrance side of the triangular prism of full internal reflection 11 of the electrooptical modulator is located perpendicularly to a direction of one colour radiation.

The electrooptical device can contain three electrooptical modulators, each of which is made by the first or second offered variants, including their special cases of performance, and contains as a transparent dielectric substrate a triangular prism of full internal reflection. Two illuminators can be additionally placed, and radiation sources 14 of the first, second and third illuminator 13 are made in the form, accordingly, of radiation sources of red R, green G and blue B colour. The incidence angles of radiation, accordingly, of red $\alpha$R, green $\alpha$G and blue $\alpha$B onto the metal layer 2 corresponding electrooptical modulator 5 are equal, accordingly, to resonance angles $\Theta$R, $\Theta$G and $\Theta$B of angular resonance curves for each of electrooptical modulator 5 with a deviation from these angles, not exceeding half of half-width of corresponding angular resonance curve. For all three electrooptical modulators 5 one triangular prism of full internal reflection is used. Before the visualizer 16 on an optical axis the system of dichroic mirrors 27 made with an opportunity of a direction of radiation from all three radiation sources 14 in parallel to optical axis to the visualizer 16 is placed. The control devices 6 of all electrooptical modulators 5 are made in the form of the uniform block of control 26 which is electrically connected to each of radiation sources and with each electrooptical modulator 5. The uniform block of control is made with an opportunity of parallel switching on red R, green G and blue B radiation sources synchronously with switching on the electrooptical modulator 5 corresponding given colour.

In additional, the matching element can be located before an entrance side of the triangular prism of full internal reflection of the electrooptical modulator and made so that radiation from each of the radiation sources falls perpendicularly to its surface turned to the radiation sources.

Thus a surface of matching detail 28 turned to the side of falling radiation can be made either as cylindrical or as containing three sides, each of these sides is perpendicular to radiation of one of the radiation sources 14. The surface of the matching detail which turned to an entrance side of a prism is made flat.

In additional, the visualizing diaphragm can be made in the form of a mirror which is located under an angle to an optical axis, and the optical trap is placed. Thus the visualizing diaphragm is located with an opportunity to direct the zero order of optical radiation to the optical trap.

The electrooptical device can contain the electrooptical modulator by the first variant wherein the dielectric substrate 7, the electroconductive layer 8 and the first dielectric layer 3 are made transparent, and as the specified transparent dielectric substrate 7 a triangular prism of full internal reflection 11 is used, thus the electroconductive layer 8 is located on the second side of the prism on a course of the modulated optical radiation 1. As the second deformable dielectric layer the dielectric medium 12 is used which contacts with the deformable metal layer 2 and which is gas or dielectric liquid. The pipeline 31 is placed which connects by the first end with volume 32 of gas or a dielectric liquid and made with an opportunity of supplying of gas or a dielectric liquid through the second end to a surface of the deformable metal layer 2 of electrooptical modulators 5. The control device 6 is made with an opportunity of supply of electric signals to the electrode system 9 of electrooptical modulator 5, Thus the electrical signals provide in gas or a dielectric liquid the creation of the running wave which is directed from the second end of the pipeline 31 to a hole located in the opposite side of the electrooptical modulator 5.

In additional, the electrooptical device can contain one electrooptical modulator which is made by the first or second variant and which contains as a transparent dielectric substrate the triangular prism of full internal reflection 11, and the additional triangular prism of full internal reflection 11 is placed. The entrance side of this prism is optically mating to an exit side of triangular prism of full internal reflection of electrooptical modulators 5. The exit side is turned to the visualizer 16, and on its second on a course of optical radiation side the additional metal layer 25 is located. The an angle between an optical axis and a perpendicular to the second side of an additional triangular prism 11 is equal to a resonance angle θ of surface plasmon resonance effect for an additional metal layer 25 and light wavelength of the illuminator 13. The electrooptical device is made with an opportunity to place gaseous, liquid or firm dielectric object 33 on a surface of an additional metal layer 25, and the device of synchronization 34 is entered, thus the detector 24 of the perception device 18 is electrically connected to the control device 6 of electrooptical modulators 5 through the entered the synchronization device 34.

In addition, the electrooptical device can contain one electrooptical modulator which is made by the first or second variant and which contains as a transparent dielectric substrate the triangular prism of full internal reflection 11, and the additional triangular prism of full internal reflection 11 can be placed. The entrance side of this prism is optically mating to an exit side of triangular prism of full internal reflection of electrooptical modulators. The exit side is turned to the visualizer, and on its second side on a course of optical radiation the additional metal layer is located. The an angle between an optical axis and a perpendicular to the second side of an additional triangular prism 11 is equal to a resonance angle θ of surface plasmon resonance effect for an additional metal layer 25 and light wavelength of the illuminator 13. The additional dielectric basis and the immersion optical layer which is located between an additional dielectric basis and an additional metal layer are placed, and the electrooptical device is made with an opportunity to place gaseous, liquid or firm dielectric object on a surface of an additional dielectric basis.

In addition, the technical result is achieved because the electrooptical device contains three electrooptical modulators 5, each of them is made according to the first or second variant, and contains as a transparent dielectric substrate a triangular prism of full internal reflection 11, and the control device 6 of each electrooptical modulator 5 is connected to the colour synchronizer 36, and also three illuminator 13 each of them contains source of radiation red R, green G and blue B colour accordingly, the system of dichroic mirrors 27, the visualizer 16 containing at least visualizing diaphragm 17 and the perception device 18, and incidence angles of radiation accordingly of red $\alpha$R, green $\alpha$G and blue $\alpha$B colour to the deformable metal layer 2 of corresponding modulator 5 are equal to the resonance angles $\Theta$R, $\Theta$G and $\Theta$B of angular resonance curves for each modulator accordingly, with a deviation from this angle, not exceeding half of half-width $\Delta\Theta$R, $\Delta\Theta$G и $\Delta\Theta$B of the corresponding angular resonance curve, and each control device 6 is made with an opportunity of supply to the electrode system 9 of corresponding modulators 5 the electric signals which causes the deformation of a metal layer 2 and causes the changing of corresponding incidence angle $\alpha$R, $\alpha$G and $\alpha$B by an amount leading to the termination of surface-plasmon resonance effect, and each of control device 6 electrically is connected to the corresponding illuminator 13, and the entrance sides of the triangular prism of full internal reflection 11 are located perpendicularly to radiation of the corresponding illuminator 13, and exit sides are turned to the side of the system of dichroic mirrors 27, made with an opportunity of a direction of the modulated each of colour radiation in parallel to the optical axis to the visualizer 16.

In addition, the visualizing diaphragm 29 can be made in the form of a mirror located under an angle to the optical axis. The optical trap 30 can be placed, and the visualizing diaphragm 29 is located with an opportunity to send the optical radiation of the zero order to the optical trap 30.

## The list of drawings

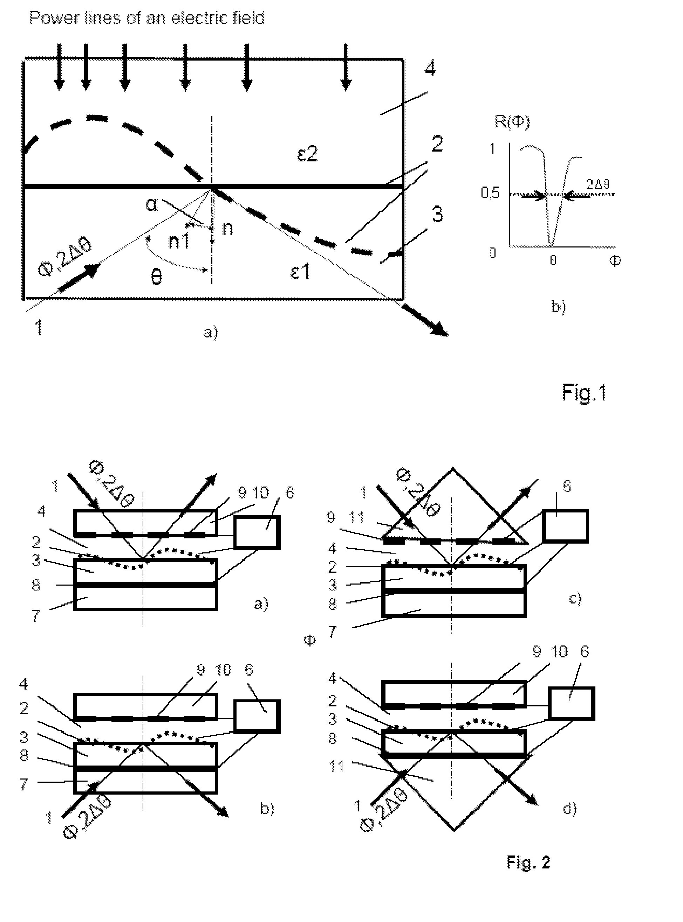

On Fig. 1 the scheme (a) and the schedule (b), which explains the proposed method of modulation of optical radiation are shown. At the angle θ, which is the a resonance angle θ of surface plasmon resonance effect, the transformation of energy of a falling wave into surface energy is maximal, φ-the divergence angle of entrance radiation; $\varepsilon_1, \varepsilon_2$ - dielectric constant permeability of deformable dielectric layers (mediums) 3 and 4 accordingly; n, $n_1$ - normals to nondeformable and deformable border between layers (mediums); β - an angle between normals n and $n_1$; 2$\Delta\Theta$ - half-widthof the angular resonance curve of surface plasmon resonance effect.

On Fig. 2 the examples of performance of the electrooptical modulator with the relief-phase surface plasmon effect which used for modulation of optical radiation are shown. The electrode system is located from the side of the second dielectric deformable layer. The scanning radiation is directed from the first layer (see Fig. 2 b and Fig. 2 d) or from the second layer (see Fig. 2a and Fig. 2c).

On Fig. 3. the examples of performance of the electrooptical modulator with the relief-phase surface plasmon effect which used for modulation of optical radiation are shown. The electrode system is located from the side of the first dielectric deformable layer. The scanning radiation is directed from the first layer (see Fig. 2 b, Fig. 2c, Fig. 2d and Fig. 2e) or from the second dielectric deformable layer (see Fig 2a).

On Fig. 4. the examples of performance of the electrooptical modulator with the relief-phase surface plasmon effect which used for modulation of optical radiation are shown. The electrode system is located from the side of the first dielectric deformable layer. The scanning radiation is directed from the same first layer.

On Fig. 5. the examples of performance of the electrooptical modulator with the relief-phase surface plasmon effect which used for modulation of optical radiation are shown. The electrode system is located from the side of the second dielectric deformable layer. The scanning radiation is directed from the first dielectric deformable layer.

On Fig. 6. the examples of performance of the electrooptical modulator with the relief-phase surface plasmon effect and an additional deformable metal layer which also is used for the surface plasmon effect are shown.

On Fig. 7. the example of performance of the electrooptical device containing two electrooptical modulators is shown.

On Fig. 8 the examples of performance of the three-colored electrooptical device with one (Fig. 8a) and three electrooptical modulators (Fig..8b) are shown.

On Fig. 9. the example of using of the visualizing diaphragm made in the form of a mirror which is located under an angle to an optical axis of the electrooptical device is schematically shown. The mirror visualizing diaphragm is used for diversion of light zero order into the optical trap.

On Fig. 10. the example of the electrooptical device in which the measurements of characteristics of gas or the dielectric liquid which input to a surface of a thin deformable metal layer (according to Fig.6) is shown.

On Fig. 11. the example of the electrooptical device with three multicolored radiation sources, three control devices and three electrooptical modulators is shown.

**Table 1.** There are the examples of four types of glass with various refraction coefficient n, angles of full internal reflection $\alpha^0$, resonance angles $\Theta$ corresponding with a minimum of the angular resonance curve of the surface plasmon resonance effect for length of a light wave 550 nm and 633 nm and thin metal layer Au by thickness 50 nm having the characteristic of the surface plasmon resonance.

**Table 2.** There are the examples of forms of the angular resonance curve of surface plasmon resonance effect for for four types of glass with various refraction coefficient n, angels of full internal reflection $\alpha^0$, resonance angles $\Theta$ corresponding with a minimum of the angular resonance curve of the surface plasmon resonance effect for length of a light wave 550 nm and 633 nm and thin metal layer Au by thickness 50 nm having the characteristic of the surface plasmon resonance.

In technics there are known the prismatic (Kretschmann, Otto) and grating methods in which the surface plasmon resonance effect on the thin metal layer located on the hard dielectric basis is realized. The form of a thin metal layer in known methods cannot be changed in a dynamic range for control of light registration process in the perception device in real time.

In the offered method of modulation of the optical radiation the modulated optical radiation 1 is directed on a surface of the reflective metal layer 2 located on boundary surface between the first deformable dielectric layer 3 and the second deformable dielectric layer 4 with different or equal permittivity. For this purpose at least one of deformable dielectric layers through which direct radiation goes onto a reflecting metal layer, is made transparent for the modulated optical radiation 1. Modulation of the polarized optical radiation 1 is carried out by the variation of an incidence angle of polarized optical radiation 1 on a metal layer 2 due to deformation of a metal layer 2 as a result of influence of an external field on boundary surface. The modulated polarized optical radiation 1 is directed onto a surface of a metal layer 2 under the incidence angle $\alpha$ providing occurrence of surface plasmon resonance effect. The changing of the incidence angle $\alpha$ of the optical radiation 1 on a surface of a metal layer 2 is carried out by deformation of a surface of a metal layer 2. Thus the relief is created directly on the thin deformable metal layer located between two deformable dielectric layers. In a declared method it is possible to achieve unique sensitivity, contrast and resolution. For the first time there is an opportunity of selective scanning of entrance radiation both on a part of the thin deformed metal layer, and on its whole surface. Thus as already it was specified above, occurrence of the surface plasmon resonance effect theoretically is real at all values of an incidence angles of the modulated optical radiation on a surface of the metal layer, to the corresponding values of an angular resonant curve which are distinct from zero. However for guarantee of stable modulation for occurrence of surface plasmon resonance effect an incidence angle $\alpha$ of the modulated optical radiation 1 on the metal layer 2 equal to resonance angle $\Theta$, to corresponding minimum of an angular resonance curve, with a deviation from this angle, not exceeding half-width $2\Delta\Theta$ of the angular resonance curve is provided, and the most preferably to provide a deviation of this angle, not exceeding half of half-width $\Delta\Theta$ of the angular resonance curve. Therefore at the further statement of invention and the description of concrete designs of electrooptical modulators and electrooptical devices with references to drawings only the most preferable range of the incidence angle that does not exclude an opportunity of realization of offered group of inventions also at other values of the incidence angle at which values of ordinate of an angular resonant curve are more than zero mainly will be specified.

For infringement of conditions of occurrence of surface plasmon resonance effect the incidence angle $\alpha$ of the modulated optical radiation 1 to a metal layer 2 is changed so that incidence angle was outside of a range of angles ($\Theta \pm \Delta\Theta$), i.e. so that an incidence angle $\alpha$ of the modulated optical radiation is more ($\Theta+\Delta\Theta$) or less ($\Theta-\Delta\Theta$). Thus it is preferably to change an incidence angle $\alpha$ of the modulated optical radiation 1 onto the metal layer 2 so that an incidence angle is outside of a range of angles ($\Theta \pm \Delta\Theta$), and it is more preferably - outside of a range of incidence angles at which the ordinate of the angular resonant curve has the values which are distinct from zero (greater-than zero).

The optical radiation 1 can be directed onto a surface of the deformable metal layer 2 from the first deformable dielectric layer 3 which is made transparent, or/and from the second deformable layer 4 which is made transparent.

Advantages of an offered method also are that optical radiation can be inputted both from the first and from the second deformable layers. A necessary condition thus is the requirement to an incidence angle of radiation onto a metal layer. Radiation should be directed or under an angle which guarantees the occurrence of surface plasmon resonance effect, or under an angle at which the occurrence of surface plasmon resonance effect is impossible, or, at least, influence of this angle on changing of a direction of radiation is insignificant.

In the first case it is necessary to create the deformations which deviates the radiation from a zone of occurrence of surface plasmon resonance effect. In the second case it is necessary to create the deformations which moves a direction of radiation in a zone of occurrence surface plasmon resonance effect. Alongside with the usual advantages of a relief-phase method of record there is an additional «an optical valve», allowing, at least, substantially to increase the contrast of the optical image.

Besides, on this basis it is possible to create the device which is sensitive by wave length of an optical radiation, etc. For the first time there is an opportunity of selective scanning of entrance radiation both on a part of the thin deformed metal layer, and on its whole surface.

Thus, in a declared method it is possible to achieve unique sensitivity, contrast and the resolution.

Thus as the external field influencing a metal layer 2, the modulated electric field can be used, for example. In this case surface deformations are created under the influence of ponderomotive forces of the modulated electric field. However creation of deforming forces and other nature is probable. The relief can be created, for example, by transmission of a ultrasonic wave along a surface of a thin deformable metal layer, by means of influence of gas jets and suchlike on this layer.

On Fig.2 there is the examples of realization of the first variant of the electrooptical modulator 5 which contains the control device 6 and the control device 6 and also the electroconductive layer 8, the first deformable dielectric layer 3, the deformable metal layer 2, the second deformable dielectric layer 4, the electrode system 9 and the dielectric basis 10, which are located consistently on the dielectric substrate 7 and contacting among themselves. The dielectric substrate 7 is made in the form of a flat-parallel plate. The electrode system 9, the deformable metal layer 2 and the electroconductive layer 8 are connected electrically to the control device 6.

Depending on from which dielectric deformable layer the radiation falls onto a deformable reflecting metal layer, at least the dielectric substrate 7, the electroconductive layer 8 and the first deformable dielectric layer 3 are made transparent, as it is shown on Fig 2b and Fig. 2d, and/or a dielectric basis 10, the electrode system 9, the second deformable dielectric layer 4 are made transparent for the used optical radiation 1 as it is shown on Fig 2a and Fig. 2c. Thus the electrooptical modulator 5 is made with an opportunity of excitation of surface plasmon resonance effect at falling the modulated optical radiation 1 onto the deformable metal layer 2 under the angle $\alpha$ which equals to the resonance angle $\Theta$ corresponding to a minimum of an angular resonant curve for the given electrooptical modulator 5 with a deviation from this angle, not exceeding of half of half-width $\Delta\Theta$ of the mentioned angular resonance curve, and providing occurrence of surface plasmon resonance effect for the given electrooptical modulator 5, and with an opportunity of the termination of surface plasmon resonance effect due to change of an incidence angle of the modulated optical radiation 1 onto the deformable metal layer 2 as a result of deformation of a metal layer 2 due to change of the electric signal inputted onto the electrode system 9 from control device 6.

In known devices of the reliefographic electrooptical modulator in absence of a relief or at its occurrence the radiation always goes outside of the deformable metal layer 2. In the present invention at occurrence of surface plasmon resonance effect the radiation goes along a deformable metal layer 2 and does not leave for its. This property of the declared invention allows to increase contrast, sensitivity and the resolution at registration of the information. Besides, for the first time there is an opportunity of selective control of light on separate sites of a thin metal layer due to the selective writing of a relief on it.

As shown on Fig. 2d, the dielectric substrate 7, the electroconductive layer 8 and the first dielectric layer 3 are made transparent, and as the transparent dielectric substrate 7 the triangular prism of full internal reflection 11 is used, thus the specified electroconductive layer 8 is located on the second side of the prism on a course of the modulated optical radiation 1.

On Fig 2c there is shown the electrooptical modulator by the first variant in which the dielectric basis 10, the electrode system 9, the second dielectric layer 4 are made transparent, and as the specified transparent dielectric basis 10 the triangular prism of full internal reflection 11 is used, and the electrode system 9 is located on the second side of the prism on a course of the modulated optical radiation 1.

Using of a prism of full internal reflection as a substrate allows to exclude passage of light through periodic electrode system, and that improves frequency-contrast and gradational characteristics of the optical image.

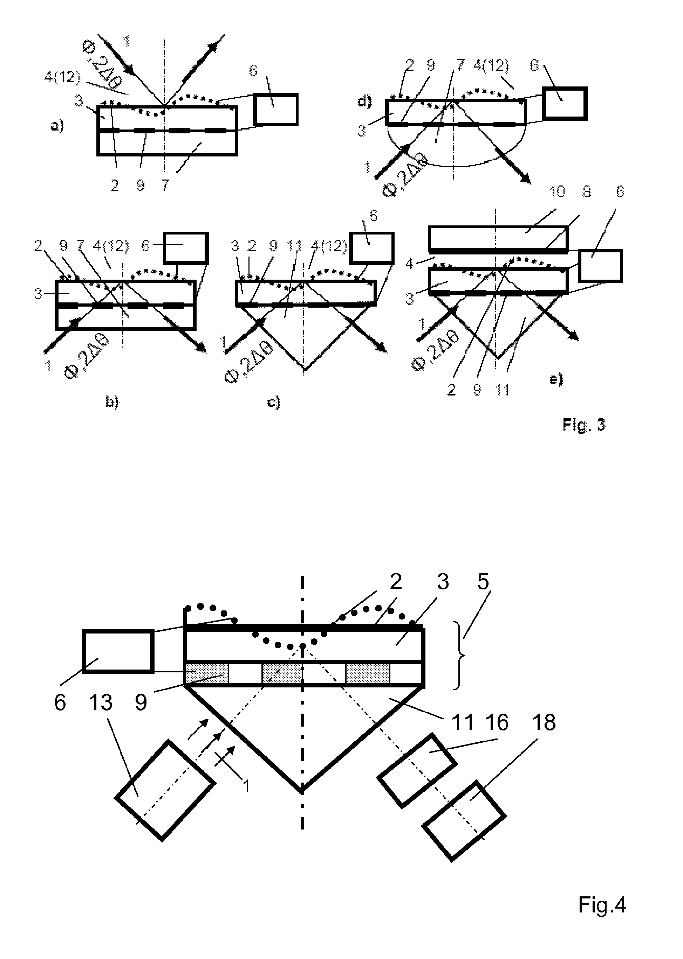

On фиг.3 there are examples of realization of the second variant of the electrooptical modulator 5 containing the control device 6 and also the electrode system 9, the first deformable dielectric layer 3, the deformable reflective metal layer 2 and the second deformable dielectric layer 4, which are located consistently on dielectric substrate 7, 11 and contacting among themselves. Thus depending on from which dielectric deformable layer the radiation falls onto a deformable reflecting metal layer, at least the dielectric substrate 7, the electrode system 9, and the first deformable dielectric layer 3 are made transparent, as it is shown on Fig 3b, Fig. 3c and Fig. 3d, and/or the the second deformable dielectric layer 4 are made transparent for the used optical radiation 1 (Fig 3a). Thus electrode system 9 and the deformable metal layer 2 are connected electrically to the control device 6, and the electrooptical modulator 5 is made with an opportunity of occurrence of the surface plasmon resonance effect at the falling of the modulated optical radiation 1 under angle $\alpha$ on a deformable metal layer 2. This angle which equals to the resonance angle $\Theta$ corresponding to a minimum of an angular resonant curve for the given electrooptical modulator 5 with a deviation from this angle, not exceeding of half of half-width $\Delta\Theta$ of the mentioned angular resonance curve, and providing occurrence of surface plasmon resonance effect for the given electrooptical modulator 5, and with an opportunity of the termination of surface plasmon resonance effect due to change of an incidence angle $\alpha$ of the modulated optical radiation 1 onto the deformable metal layer 2 as a result of deformation of a metal layer 2 due to change of the electric signal inputted onto the electrode system 9 from control device 6.

In this offered variant of the electrooptical modulator it is possible to use not only prismatic, but also the grating method of excitation of the surface plasmon resonance effect.

On Fig..3c as a transparent dielectric substrate of the electrooptical modulator the triangular prism of full internal reflection is used, and the specified electrode system is located on its second side on a course of optical radiation. And the first side, on which the entrance optical radiation falls, is the entrance side, and a side from which the optical radiation goes out - the exit side.

Besides, as shown in Fig. 3d, as the specified transparent dielectric substrate the flat-convex lens is used, and the specified electrode system 9 is located on its flat surface. In this case at different lengths of waves of entrance optical radiation it is possible to organize the perpendicular falling of radiation onto a cylindrical surface of the flat-convex lens.

It is necessary to note, that technological execution of the offered variants of the light electrooptical modulator, shown on Figs. 3a-3d, is more simple.

Besides, as shown in Fig..3e, the dielectric basis 10 can be added, for example, in the form of a flat-parallel plate which is covered by an electroconductive layer 8 from the side turned to the deformable metal layer 2, and the space between the electroconductive layer 8 and the deformable metal layer 2 is filled by the second deformable dielectric layer 4, and the electroconductive layer 8 is connected electrically to the control device 6.

Advantage of this variant of the invention is the opportunity of amplification of an electric signal by means of an additional voltage source which is located between the electroconductive layer 8 and metal layer 2. That allows to increase sensitivity of record of information.

In addition, for all presented methods of realization of the electrooptical modulator as the second deformable dielectric layer 4 the gaseous or liquid dielectric medium, for example, air can be used.

It allows not only to apply a grating method of excitation of the surface plasmon resonance effect, but also to read out in parallel the information both from the first, and from the second deformable layers in case if the dielectric substrate, electrode system and first deformed dielectric layer will be also made as transparent.

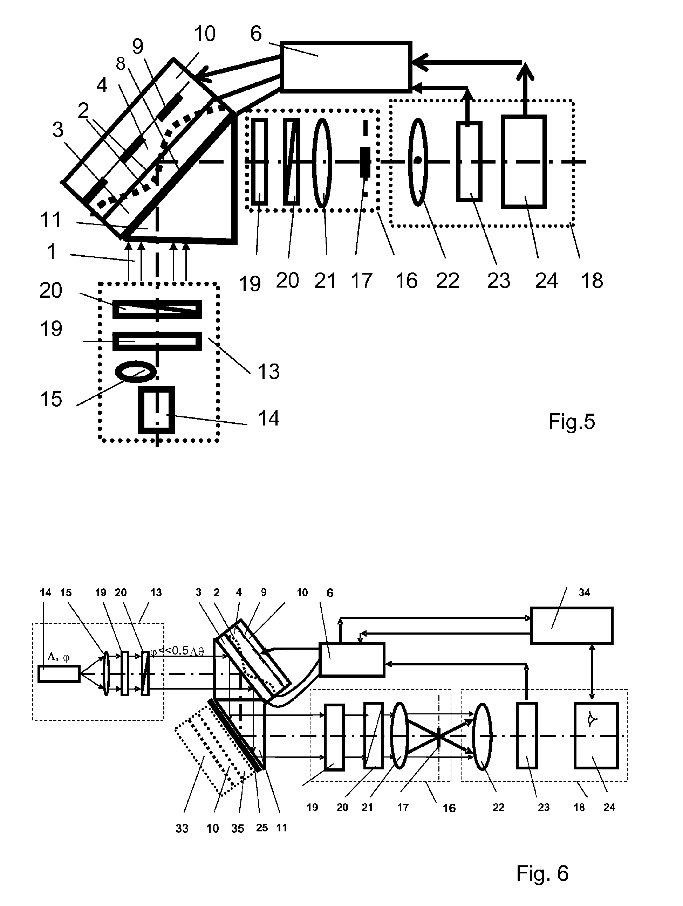

On Fig. 4 the example of performance of the first variant of the electrooptical device containing at least one of described above electrooptical modulators of optical radiation is schematically shown. The electrooptical device contains the illuminator 13 including the radiation source 14 and the collimating objective 15 (Fig. 5), and also at least one electrooptical modulator 5, the visualizer 16 containing the visualizing diaphragm 17 (Fig. 5) and the perception device 18 which are located on optical axis consistently. Thus as the electrooptical modulator can be used any electrooptical modulator offered above. On Fig. 4 there is shown as an example the electrooptical modulator by the second variant, containing as a transparent dielectric substrate the triangular prism of full internal reflection 11 is used, and the electrode system 9, the first deformable dielectric layer 3, the deformable metal layer 2 are located on the second side of prism on a course of the modulated optical radiation 1. Thus as the second dielectric deformable layer the layer of air contacting to a deformable metal layer is used.

Thus as far as at the surface plasmon resonance effect it is necessary to illuminate the metal layer 2 by monochromatic linearly polarized radiation 1, and the vector of polarization should lay in a plane of incoming radiation, so the polarizer 19 is added in illuminator 13 (see Fig.5). Advantage of this electrooptical device is improvement of quality of the image and expansion of application fields due to of using the electrooptical modulator with the surface plasmon resonance effect which allows to reject radiation from an optical axis in absence of an entrance electric signal.

On Fig. 5 there is shown the electrooptical device in which in the illuminator 13 consisting of radiation source 14, the collimation objective 15 and the polarizer 19 which are consistently located, the first quarter wave plate 20 is entered. In the visualizer 16 which contents the vizualising diaphragm 17, the second polarizer 19, the second quarter wave plate 20 and a Fourier-objective which are located consistently on an optical axis 21 are entered. The visualizing diaphragm 17 is located in a focal plane of Fourier-objective 21. Thus the perception device 18 contains the objective 22, the analyzer of quality of wave front 23 and the detector 24, and the detector 24 and the analyzer of wave front 23 electrically are connected with the control device 6 of the electrooptical modulators 5, and the specified control device 6 is made with an opportunity of correction of amplitude and a phase of wave front of the modulated optical radiation 1.

Thus by means of the quarter wave plate 20 it is possible to correct a phase of a light wave on half of period. The visualizing diaphragm 17 extracts the necessary spectral strips of those or other orders of diffraction. It allows to to increase the contrast and selectivity of the device at visualization of the information. Placement of the analyzer of quality of wave front 23 enables to improve quality of wave front due to a feedback with the control device 6.

On Fig.6 there is the electrooptical device containing the electrooptical modulator 5 in which as the substrate 7 the triangular prism of full internal reflection 11 is used. Thus the additional triangular prism of full internal reflection 11 is placed, and its entrance side is optically mating to an exit side of triangular prism of full internal reflection 11 of electrooptical modulators 5, the exit side is turned to the visualizer 16, and on its second on a course of optical radiation side the additional metal layer 25 is located, and an angle between an optical axis and a perpendicular to the second side of an additional triangular prism 11 is equal to a resonance angle θ of surface plasmon resonance effect for an additional metal layer 25 and light wavelength of the illuminator 13.

Relief control on the first metal layer 2 allows to change contrast and spectral structure of the optical image, and also polarization and an angle of the incoming radiation onto the additional metal layer 25. Placement of the second metal layer 25 in an optical path of the light modulation device allows to improve quality of the image due to an additional filtration of radiation depending on an incidence angle of radiation onto the second metal layer 25. The open access to this layer from the free second side of the second triangular prism 11 allows to use the offered electrooptical device as a sensor control in nanotechnology or in microscopes with the ultrahigh resolution.

Thus the electrooptical device according to claim 18 is made with an opportunity to place gaseous, liquid or firm dielectric object 33 on a surface of an additional metal layer 25 which is placed on the second side of the second prism 11, and the device of synchronization 34 is entered. Thus the detector 24 of the perception device 18 is electrically connected to the control device 6 of electrooptical modulators 5 through the entered the synchronization device 34.

In this variant of the invention the opportunity of a deviation of radiation by means of the electrooptical modulator due to occurrence of the higher orders of diffraction on a relief grating is combined with an opportunity of suppression of the zero order due to occurrence of surface plasmon resonance at an incidence angle of radiation onto the first and second metal layers 2 and 25, providing the occurrence of surface plasmon resonance effect. Contact of the test dielectric layer can be received, for example, with using of immersion liquids.

Besides, the dielectric basis 10 and the immersion optical layer 35 (shown in Fig.6 by dashed lines) which is located between the dielectric basis 10 and an second metal layer 25 are placed. The electrooptical device is made with an opportunity to place gaseous, liquid or firm dielectric object on a surface of an additional dielectric basis. In this case at change of dielectric properties or thickness of dielectric object 33 the resonance angle Θ and the form of the angular resonance curve of surface plasmon resonance will be change. These changes will be registered finally by the detector 24 of the perception device 18. Control of temporal and spatial frequency properties of radiation by means of the electrooptical modulator 5 allows to receive high selectivity and sensitivity of the electrooptical device.

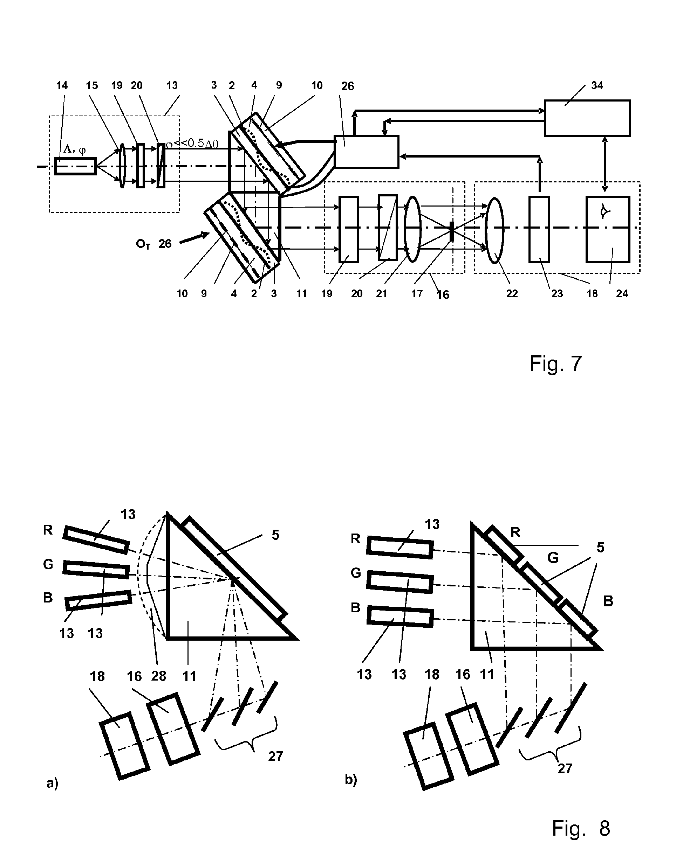

On Fig. 7 there is the electrooptical device containing two electrooptical modulators 5 shown, in each of which and as a transparent dielectric substrate the triangular prism of full internal reflection 11 is used, and an exit side of the triangular prism of full internal reflection 11 of the first electrooptical modulator 5 is optically mating to an entrance side of the triangular prism of full internal reflection 11 of the second electrooptical modulator 5, and the exit side of this prism is located perpendicularly to the optical axis and directed to the side of a visualizer 16, and control device 6 of the first and second modulators 5 are made in the form of the uniform control block 26.

Thus, in that case when both modulators work synchronously, in absence of a signal the zero order deviates from optical axis due to the surface plasmon resonance. If, nevertheless, the part of radiation gets onto the second modulator, that and in this case the radiation again deviates from optical axis. Residual radiation of the zero order can be in addition blocked by means of a visualizing diaphragm 17. Thus, it is possible to receive ultrahigh contrast due to a quadruple filtration of residual radiation (taking into consideration the second polarizer 19). When two modulator are working synchronously, at the signal supply the part of radiation of the zero order which has been not transformed to the higher order by means of the first modulator will be transformed by means of the second modulator.. It is one more method of the increase of contrast, and also expansion of a dynamic range of the declared electrooptical device.

If radiation of the illuminator 13 is directed under an angle at which there is no the surface plasmon effect the whole radiation in absence of a signal will get in a visual analyzer 16. At signal switching on and occurrence of a relief the incidence angle of radiation onto a metal layer 2 will be in the range, providing occurrence of the surface plasmon effect. It is optimal, if the angle will be in the range of half of half-width $\Delta\Theta$ of the angular resonance curve. It is possible to receive the the information about partial or full deviation of radiation from an optical axis. In this variant so-called « bright-field» schlieren-optics it is possible to increase contrast by means of the visualizing diaphragms 17 overlapping first and other high orders of diffraction. It is known, that usual the « bright-field» schlieren-optics has low contrast and a dynamic range. In the offered invention this disadvantage is eliminated.

On Fig. 8a the electrooptical device is schematically shown. It contains one electrooptical modulator 5, and three illuminators 13, thus sources of radiation of the first, second and third illuminator 13 are made in the form of sources of radiation, accordingly, red R, green G, and blue B colour, thus incidence angles of red $\alpha$R, green $\alpha$G and blue $\alpha$B radiation onto a deformable metal layer 2 of electrooptical modulators are equal, accordingly, to resonance angles $\Theta$R, $\Theta$G and $\Theta$B of angular resonance curves for each of the specified radiation with a deviation from these angles not exceeding half of half-width corresponding to the angular resonance curve, and the electrooptical modulator 5 is made according to claims 7, 11, 12. Before the visualizer 16 on an optical axis the system of dichroic mirrors 27 which is made with an opportunity of a direction of radiation from all three radiation sources 14 in parallel optical axes to the visualizer 16 is located, and the control device 6 of the electrooptical modulator is electrically connected to each of the radiation source 14 of the illuminator 13 and made with an opportunity of consecutive switching on red, green and blue radiation sources 14 synchronously with switching on the electrooptical modulator 5.

High contrast in consecutive transfer of colors in comparison with known devices is reached by selectivity of a resonant angle for the same metal layer working consistently at falling on it of radiation with various length of a wave under different resonant angles $\theta$.

One more advantage of the offered device is low cost, due to using of one electrooptical modulator 5 for transfer of the color image.

It is reasonable to locate an entrance side of the triangular prism of full internal reflection 11 of the electrooptical modulators perpendicularly direction of distribution of one of color radiation.

In additional, the matching element 28 can be located before an entrance side of the triangular prism of full internal reflection of the electrooptical modulator and made so that radiation from each of the radiation sources falls perpendicularly to its surface turned to the side of the radiation sources. Thus a surface of matching detail 28 turned to the side of falling radiation is made either as cylindrical or as containing three sides, each of which is perpendicular to radiation of one of the radiation sources 14, and a surface of the matching detail 28, turned to an entrance side of a prism, is made flat.

In this case reflection loss are excluded or, at least, considerably reduced due to perpendicular falling of radiation onto the transparent substrate for all three colors and the use efficiency is raised.

On Fig.Bb the electrooptical device is schematically shown. It contains three electrooptical modulators 5, each of them contains as a substrate a triangular prism of full internal reflection 11 and three illuminators 13. Thus radiation sources 14 of the first, second and third illuminator 13 are made in the form, accordingly, of radiation sources of red R, green G and blue B colour, and incidence angles of radiation, accordingly, of red $\alpha$R, green $\alpha$G and blue $\alpha$B onto the metal layer 2 of corresponding electrooptical modulator 5 are equal, accordingly, to resonance angles $\Theta$R, $\Theta$G and $\Theta$B of angular resonance curves for each of electrooptical modulator 5 with a deviation from these angles, not exceeding half of half-width of corresponding angular resonance curve. For all three electrooptical modulators 5 one triangular prism of full internal reflection is used as a substrate. Before the visualizer 16 on an optical axis the system of dichroic mirrors 27 made with an opportunity of a direction of radiation from all three radiation sources 14 in parallel to optical axis to the visualizer 16 is placed. The control devices 6 of all electrooptical modulators 5 are made in the form of the synchronizer uniform block of control 26 (it isn't shown on Fig. 8b), which is electrically connected to each of radiation sources and with each electrooptical modulator 5 and is made with an opportunity of parallel switching on red R, green G and blue B radiation sources synchronously with switching on the electrooptical modulator 5 corresponding given colour.

In this case progress of good contrast is combined with an opportunity of full use of radiation from all three sources due to optimization of a relief for each color and to parallel switching of all three colors. Application of one prism allows to realize a compact design of the electrooptical device.

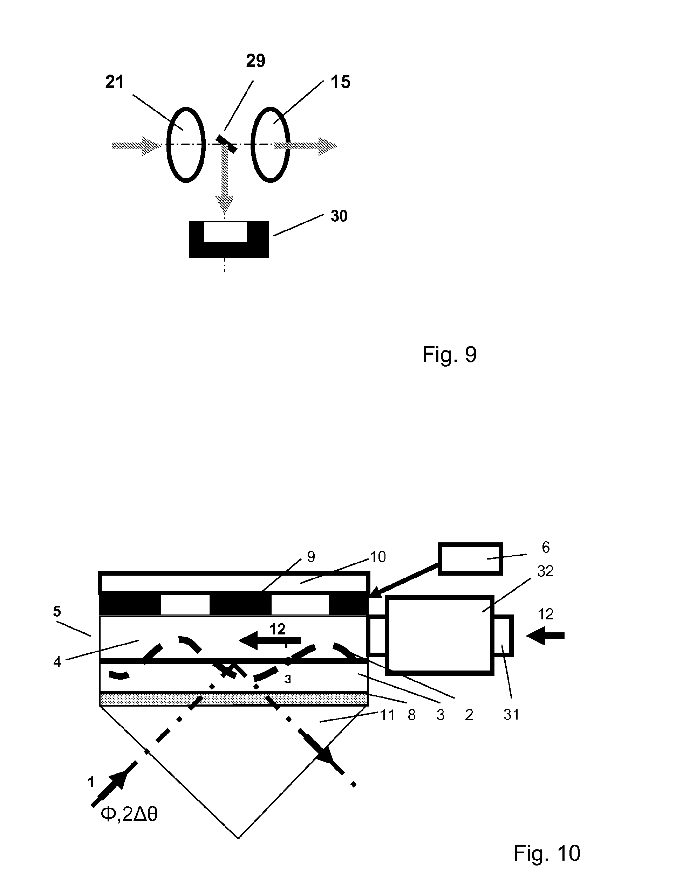

On Fig.9 the execution of a visualizing diaphragm in the form of a mirror 29 located under an angle to an optical axis is shown. The expediency of using of such visualizing diaphragm is in this fact that even at the top-quality of blacken of the visualizing diaphragm 29, (i.e. the maximal increase of the absorption coefficient) the part of the radiation which falls onto the surface of a diaphragm is dissipated. Use of the mirror visualizing diaphragm located under an angle to an optical axis, allows from the electrooptical device to take out the radiation blocked by a visualizing diaphragm. That raises quality of the transmitted information.

Thus the optical trap 30 can be placed, and the visualizing diaphragm be located with an opportunity to direct the zero order of optical radiation to the optical trap 30. In this case the opportunity of transformation of light energy in thermal one without parasitic distribution of radiation is realized.

On Fig.10 there is the example of performance of the electrooptical modulator which is used in the electrooptical device. In it as the second deformable dielectric layer the dielectric medium 12 is used which contacts with the deformable metal layer 2 and which is gas or dielectric liquid. The pipeline 31 is connected by the first end with volume 32 of gas or a dielectric liquid and made with an opportunity of supplying of gas or a dielectric liquid through the second end to a surface of the deformable metal layer 2 of electrooptical modulators 5. The control device 6 is made with an opportunity of supply of electric signals to the electrode system 9 of electrooptical modulator 5. The electrical signals provide in gas or a dielectric liquid the creation of the running wave, directed from the second end of the pipeline 31 to a hole located in the opposite side of the electrooptical modulator 5.

Running waves can be created on a surface of a thin deformable metal layer by means of a known operating regime of the control device. Those waves allow to realize «pump effect» for movement of the dielectric medium in a gap between electrode system 9 and a metal layer 2. Due to change of properties of an angular resonant curve at change of properties of the dielectric medium (or occurrence of a new kind of the dielectric medium) the changing of these properties can be registered by means of the perception device 18. The offered variant of realization of the invention can be used as the high-sensitivity sensor reacting to change of properties of the dielectric medium in a real time.

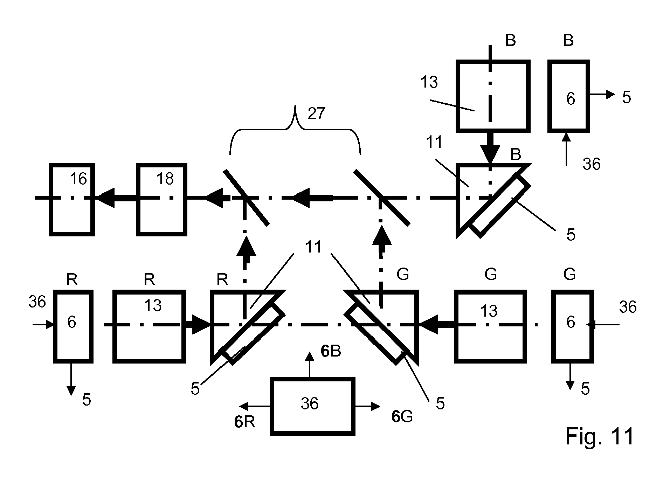

On Fig. 11 there is the second variant of the electrooptical device which contains three electrooptical modulators 5, each of which is made by the first or second variant and contains as a substrate the triangular prism of full internal reflection. The control device 6 of each electrooptical modulator 5 is connected to the colour synchronizer 36. Besides, the electrooptical device contents three illuminator 13 each of them contains source of radiation red R, green G and blue B colour accordingly, the system of dichroic mirrors 27, the visualizer 16 containing at least visualizing diaphragm 17 and the perception device 18. The incidence angles of radiation accordingly of red $\alpha R$, green $\alpha G$ and blue $\alpha B$ colour to the deformable metal layer 2 of corresponding modulator 5 are equal to the resonance angles $\Theta R$, $\Theta G$ and $\Theta B$ of angular resonance curves for each modulator accordingly, with a deviation from this angle, not exceeding half of half-width $\Delta\Theta R$, $\Delta\Theta G$ и $\Delta\Theta B$ of the corresponding angular resonance curve, and each control device 6 is made with an opportunity of supply to the electrode system 9 of corresponding modulators 5 the electric signals which causes the deformation of a metal layer 2 and causes the changing of corresponding incidence angle $\alpha R$, $\alpha G$ and $\alpha B$ by an amount leading to the termination of superficially of surface-plasmon resonance effect. Each of control device 6 electrically is connected to the corresponding illuminator 13, and the entrance sides of the triangular prism of full internal reflection 11 are located perpendicularly to radiation of the corresponding illuminator 13, and exit sides are turned to the side of the system of dichroic mirrors 27, made with an opportunity of a direction of the modulated each of colour radiation to the visualizer 16 in parallel to the optical axis.

The offered variant of the invention contains the electrooptical modulator unified for all three colors that allows to reduce the price of the color electrooptical device. Optimization of work of each of them allows to receive the maximal power on the perception device (for example, on the screen of a color projector).

Thus, as well as in the first variant of the electrooptical device the visualizing diaphragm 29 can be made in the form of a mirror located under an angle to an optical axis because even at the top-quality of blacken of the visualizing diaphragm 29 the part of the radiation is dissipated. Use of the mirror visualizing diaphragm located under an angle to an optical axis, allows to take out the radiation blocked by a visualizing diaphragm from the electrooptical device. That raises quality of the transmitted information. Besides, the optical trap 30 can be placed, and the visualizing diaphragm 29 can be located with an opportunity to send the optical radiation of the zero order to the optical trap 30. (Fig. 9). Advantage of this variant of the invention is the opportunity of transformation of light energy in thermal energy without the parasitic radiation propagation.

Further there is the example of realization of an offered method of modulation of optical radiation. There is the description of work of preferable variants of execution of offered variants of the electrooptical modulator and the electrooptical device.

The offered method of modulation of optical radiation is realized by a direction of modulated optical radiation 1 onto a surface of the metal layer 2 which is located on boundary surface between the first deformable dielectric layer 3 and the second deformable dielectric layer 4 with different or equal permittivity. For that at least one of deformable dielectric layers is made transparent for the modulated optical radiation 1. The optical radiation 1 is modulated by the variation of an incidence angle of the optical radiation 1 on a metal layer 2 due to deformation of a metal layer 2 as a result of influence of an external field on the boundary surface. The modulated polarized optical radiation 1 is directed onto a surface of a metal layer 2 under the incidence angle $\alpha$ providing occurrence of surface plasmon resonance effect. The metal layer 2 is deformed so that the changing of the incidence angle $\alpha$ of the optical radiation 1 on a surface of a metal layer 2 provides infringement of conditions of occurrence of surface plasmon resonance effect.

In technics there are known the properties of the surface plasmon resonance which can be on the some metal layers 2 which are located on dielectric surfaces. Under certain conditions the radiation incoming on a surface of thin metal layers, goes along interface of two diverse mediums and has properties different from usual electromagnetic waves. These properties are characterized by the curve of surface plasmon resonance. (Fig. 1 b). Usually, the angle $\Theta$ of the angular resonance curve of surface plasmon resonance is more than glass angle of full internal reflection, and half-width $2\Delta\Theta$ of the angular resonance curve is rather narrow. The form of this curve depends on properties of dielectric layers 3 and 4 and a metal layer 2 contacting to them (see Table 1,2). Known methods are based on traditional registration of a minimum of intensity of the angular resonance curve of surface plasmon resonance effect. Two classical methods are known: prismatic (Kretschmann, OTTO) and grating [Kretschmann E. Zs. Phys., 241, 313 (1971); Otto A. Zs. Phys., 216, 398 (1968); Schuk P Ann. Rev. Biohysics Biomolec. Structures 26 541 (1997)]. In a method offered by us the relief is created on the thin deformable metal layer placed between two dielectric deformable layers, even if one of which has elastic-viscous properties. The relief is formed due to action of external forces, for example, the modulated electric field.

Let's note two main advantages of an offered method. First, it is possible to achieve unique sensitivity which the surface plasmon resonance effect has near to the resonant maximum at phase registration of light changes. Secondly, for the first time there is an opportunity of selective scanning of entrance radiation both on a part of a thin metal layer, and on its all surface. In both cases the change of a relief can be made in scale of real time (the response time of gel deformable layers is nearer to 1 micro second). Thirdly, the declared method allows not only to position precisely angular parameters of a surface of a thin deformable metal layer, but also to change them in the time. In other words, for the first time there is an opportunity to operate on the surface plasmon resonance in a dynamic mode.

Thus for occurrence of surface plasmon resonance effect it is guaranteed that the an incidence angle $\alpha$ of the modulated optical radiation 1 onto the metal layer 2 is equal to resonance angle $\Theta$ which is corresponding to minimum of an angular resonant curve. Thus the occurrence of the surface plasmon resonance effect theoretically is real at all values of an incidence angles $\alpha$ of the modulated optical radiation onto the surface of the metal layer, to the corresponding values of an angular resonant curve which are distinct from zero. However for guarantee of stable modulation it is preferably for occurrence of surface plasmon resonance effect to provide the incidence angle $\alpha$ of the modulated optical radiation 1 on the metal layer 2 equal to resonance angle $\Theta$, which corresponds to minimum of an angular resonance curve, with a deviation from this angle, not exceeding half-width $2\Delta\Theta$ of the angular resonance curve is provided, and it is the most preferably to provide a deviation of this angle, not exceeding half of half-width $\Delta\Theta$ of the angular resonance curve.

And for infringement of conditions of occurrence of surface plasmon resonance effect the incidence angle $\alpha$ of the modulated optical radiation 1 to a metal layer 2 is changed so that incidence angle was outside of a range of angles $(\Theta \pm \Delta\Theta)$, i.e. so that an incidence angle $\alpha$ of the modulated optical radiation is more $(\Theta+\Delta\Theta)$ or less $(\Theta-\Delta\Theta)$. Thus it is preferably to change an incidence angle $\alpha$ of the modulated optical radiation 1 onto the metal layer 2 so that an incidence angle is outside of a range of angles $(\Theta \pm \Delta\Theta)$, and it is more preferably - outside of a range of incidence angles at which the angular resonant curve has the values which are distinct from zero. At this method it is guaranteed the valving kind of working. In that specific case the relief-phase modulator can work not using the surface plasmon resonance effect.

And the optical radiation 1 can be directed on a surface of a deformable metal layer 2 from the first deformable layer 3 which is made transparent, or from the second deformable layer 4 which is made transparent. And it is also real both the first deformable layer, and the second deformable layer to be simultaneous transparent.

Thus as already it was specified above, it is the most expedient as the external field influencing upon a metal layer 2, for example, to use a modulated electric field. However deformations can be by other external influences, for example, by influence by ultrasound, pneumatic jets, etc.

The electrooptical modulator by the first variant, shown on Fig.2a, works as follows. From the control device 6 the electric signals in the form of, for example, rectangular voltage impulses which amplitude corresponds to the written information are inputted on the electrode system 9. As a result, the ponderomotive forces are arisen on boundary surface between the first deformable dielectric layer 3 covered by a metal layer 2, and the second deformable dielectric layer 4. These ponderomotive forces produce the deformation (relief) of a free surface of the first deformable dielectric layer 3, covered by a metal layer 2. Boundary surface of dielectric mediums is illuminated under an angle by the monochromatic linearly-polarized light with the vector of polarization laying in a plane of incoming radiation and with divergence smaller, than half-width $2\Delta\Theta$ of the angular resonance curve. If the incidence angle $\alpha$ is equal to resonance angle $(\Theta+\Delta\Theta)$, that in absence of deformations there is surface plasmon resonance effect is arisen, and radiation 1 goes along the thin metal layer 2. If due to the created relief the incidence angle of radiation onto a surface of the deformable layer 2 does not guarantee the occurrence of surface plasmon resonance effect, then the radiation is reflected from boundary surface under the law of full internal reflection. Thus the modulator works as it is described earlier (see, for example, WO 01/48531 A2, published 05.07.2001).

The electrooptical modulator by the first variant, shown on Fig. 2d, works as follows. As a transparent dielectric substrate the side of the triangular prism of full internal reflection 11, which is as second side on a course of optical radiation, is used. The entrance optical radiation 1 goes on the first (entrance) side, further the radiation goes on the second side, which is the transparent dielectric substrate on which the transparent electroconductive layer 8, which covered by the first deformable dielectric layer 3 with deposited metal layer 2. The optical radiation 1 goes out from the third (exit) side after full internal reflection from the second side. The triangular prism of full internal reflection allows to simplify input and output of radiation 1 and to improve quality of work of the electrooptical modulator without derange of the electrooptical modulator.

The electrooptical modulator by the second variant which examples of performance are shown on Figs. 3, works as follows. The electric signals in the form of, for example, rectangular voltage impulses which amplitude corresponds to the written information are inputted from the control device 6 onto the electrode system 9 which is located on the dielectric substrate made in the form of a flat-parallel plate 7 (Fig. 3a) or in the form triangular prism of full internal reflection 11 (Fig. 3c), and it is covered by the first deformable dielectric layer 3 with the deposited metal layer 2. As a result of it on the boundary surface between the first deformable dielectric layer 3 covered by a metal layer 2 and the second deformable dielectric layer (as which the dielectric medium 12 which contacts to a deformable metal layer 2 in this case is used), the ponderomotive forces which produces the deformation (relief) on it are arisen. The boundary surface of dielectric mediums is illuminated under an angle $\alpha$ by the monochromatic linearly-polarized radiation with the vector of polarization situated in a plane of incoming radiation and with divergence smaller, than half-width of the angular resonance curve. If the incidence angle $\alpha$ is equal to resonance angle $\Theta$, that in absence of deformations there is surface plasmon resonance effect is arisen, and radiation 1 goes along the thin metal layer 2. If due to the created relief the incidence angle of radiation onto a surface of the deformable layer 2 does not guarantee the occurrence of surface plasmon resonance effect, then the radiation is reflected from boundary surface under the law of full internal reflection. Thus the modulator works as it is described earlier (see, for example, WO 01/48531 A2, published 05.07.2001).

In the electrooptical modulator shown on Fig.3a, the second deformable dielectric layer 4 is made transparent for modulated optical radiation 1 and radiation goes from the second deformable dielectric layer 4. That allows using it in a mode of grating surface plasmon resonance effect.

In the electrooptical modulator shown on Fig. 3b, the dielectric substrate 7, electrode system 9 and the first deformable dielectric layer 3 are made transparent for modulated optical radiation 1. In this case for improvement of optical connection the triangular prism of full internal reflection 11 (Fig. 3c) or a cylindrical flat-convex lens (Fig. 3d) can be used. Thus the opportunity to read out the information from the second deformable dielectric layer 4 or medium 12 is kept.

If in the capacity of a transparent dielectric substrate the triangular prism of full internal reflection is used the entrance optical radiation 1 goes on the first (entrance) side, further the radiation goes on the second side on which the transparent electrode system 9 is placed. The transparent electrode system 9 is covered by the first deformable dielectric layer 3 with deposited metal layer 2. From the third (exit) side the optical radiation 1 goes out after full internal reflection from the second side. The triangular prism of full internal reflection allows to simplify input and output of radiation 1 and to improve quality of work of the electrooptical modulator .

In the electrooptical modulator 5 shown on Fig.3d, as the second deformable dielectric layer the dielectric medium contacting to a deformable metal layer 2, for example, air is used. As a transparent dielectric substrate the a cylindrical flat-convex lens is used, and its cylindrical surface is perpendicular to entrance optical radiation 1. Using of a cylindrical lens allows to eceive optical contact of entrance optical radiation 1 with a metal layer 2 with smaller losses.

In the electrooptical modulator 5 shown on Fig. 3e, the dielectric basis 10 is added, for example, in the form of a flat-parallel plate which is covered by an electroconductive layer 8 from the side turned to the deformable metal layer 2, and the space between the electroconductive layer 8 and the deformable metal layer 2 is filled by the second deformable dielectric layer 4, and the electroconductive layer 8 is connected electrically to the control device 6. Application of an additional electrode in the form of the electroconductive layer 8 allows to strengthen the electric signal inputted on the electrode system 9. Variants of execution of the electrode system 9 can be various (see, for example, WO 01/48531 A2).

The electrooptical device by the first variant, shown on Fig.4, works as follows. On electrode system 9 which is located on the triangular prism of full internal reflection and which is covered by the first deformable dielectric layer 3 with the deposited metal layer 2 electric signals are inputted the control device 6. As a result, the ponderomotive forces are arisen on boundary surface between the first deformable dielectric layer 3 covered by a metal layer 2, and the second deformable dielectric layer 4. These ponderomotive forces produce the deformation (relief). The boundary surface of dielectric mediums is illuminated under an angle $\alpha$ by the monochromatic linearly-polarized radiation with the vector of polarization situated in a plane of incoming radiation and with divergence smaller, than half-width of the angular resonance curve. If the incidence angle guarantees in absence of deformations the occurrence of the surface plasmon resonance effect for example, in the optimal case when the incidence angle is equal to resonance angle $\Theta$, then the radiation 1 goes along the thin metal layer 2. Residual radiation goes onto the visual analyzer 16 and is absorbed by a visualizing diaphragm 17, and does not go in the perception device 18.

If due to the created relief the incidence angle of radiation onto a surface of the deformable layer 2 does not guarantee the occurrence of surface plasmon resonance effect, then the radiation is reflected from boundary surface under the law of full internal reflection, gets on the visualizer 16. The useful part of radiation gets in the perception device 18 by means of the visualising diaphragm 17.

The electrooptical device shown on Fig.5, works as follows. Radiation 1 leaves the illuminator 13 which consists of the radiation source 14, the collimation objective 15, the polarizer 19 and the first quarter-wave plate 20 which are consistently located, then through the prism 11 gets in the modulator 5 which work is described above. The visualizer 16 contains the visualizing diaphragm 17, the second polarizer 19, the second quarter-wave plate 20 and the Fourier-objective 21. The visualizing diaphragm 17 is located in a focal plane of the Fourier-objective 21.

It is known [V.E.Kochergin, etc., Quantum electronics, volume 25, N⎵9 (1998), p.p. 857-861], that spatial distribution of a phase in researched (signal) radiation can be revealed due to an interference with other (basic) radiation. Dependence of a phase of the reflected radiation on an incidence angle can be conveniently observed if the reflected beam is dispersed in the plane of light incidence, and the angle of axes convergence of the interfering beams lays in other plane. In our case change of a phase of the reflected radiation from a metal layer 2 can be observed, because the reflected radiation is dispersed due to diffraction on a relief grating, and the angle of axes convergence of interfering radiations lays in other plane. On the perception device 18 the interference figure is observed. In it the interference fringe represents the required angular dependence of a phase on the incidence angle of signal radiation. For optimization of this process the polarizers 19 and a quarter-wave of a plate 20 are entered in the illuminator 13 and a visualizer 16. It is necessary to consider, that the phase (mechanical) relief on a surface of a metal layer 2 rejects and polarizes the optical radiation (by similarly to any diffraction grating). For the first time there is an opportunity of a combination of spatial and time control of the surface plasmon resonance effect. Spatial control allows to detect a plenty of samples for research, and time control - to simplify technics of detecting of each sample. Additional use of a visualizing diaphragm 17 in a phase plane of Fourier-objective 21 allows to transform with high contrast the phase changes of radiation 1 into amplitude changes, if it will be necessary.

By means of an objective 22, the analyzer of quality of wave front 23 and the detector 24 the information about properties of amplitude and phase of the received wave front goes into the control device 6. As far as the control device 6 is made with an opportunity of correction of amplitude and a phase of wave front by means of this feedback, the corrected electric signal again goes onto electrode system 9.

Advantage of this device is its security from parasitic noise and drifts because the interfering beams pass through the same optical elements. The view of the interference fringe can be changed by known methods, for example, by means of a two-refractive element which allows to change a direction of the basic and signal beams having different planes of polarization.

The electrooptical device shown on Fig.6, works as follows. In this variant of the device the polarized radiation from the illuminator 13 falls under an angle θ of the surface plasmon resonance through the first triangular prism of full internal reflection onto metal layer 2 electrooptical modulators. The part of radiation produces the surface light waves due to surface plasmon resonance. Other part of radiation, due to full internal reflection, gets on the additional triangular prism of full internal reflection 11 and in full or in part is transformed to surface light waves on an additional metal layer 25. Residual radiation is focused by the Fourier-objective on a visualizing diaphragm 17. At input of electric signals from the control device 6 onto electrode system 9 the mechanical relief is created on the metal layer 2 of the electrooptical modulators.

If change of amplitude of a relief leads to angular deviations of radiation under which the conditions of occurrence of surface plasmon resonance effect are kept, for example, changing of an incidence angle is less of half of half-width of the angular resonance curve, then the interference fringe will be arisen on the screen of the perception device 18, as it has been described above.

If change of amplitude of a relief leads to the angular deviations of radiation which leads to the infringement of conditions of occurrence of surface plasmon resonance effect or, at least, to significant reduction of its influence on change of a direction of distribution of light (for example if in a result of changing of the direction of distribution of incoming radiation the incidence angle lays outside of the values corresponding to half-width of the angular resonance curve), then the radiation of the first and other maximum orders according to the relief information will be visualized in the form of gradation of brightness by means of the perception device 18.

The placement of an additional metal layer 25 in an optical path of the electrooptical device allows to increase the contrast of the image due to the surface plasmon resonance effect in each metal layer 2 in absence of a relief on first of them. The easy approach to the second layer allows to use the electrooptical device as a sensor control. It is known, that the condition of excitation of the surface plasmon resonance depends not only on properties of a metal layer, but also from dielectric properties of medium on which this layer borders. Therefore any dielectric film on surface of a metal layer changes characteristics of the angular resonance curve of surface plasmon resonance effect. They can be registered by means of the perception device 18. The control of the relief on the first metal layer 2 allows to change contrast, polarization of light radiation, and also an incidence angle of radiation onto the second metal layer 25 due to diffraction on the relief of the first metal layer 2. This variant of realization of the invention can be used as the high-sensitivity sensor control reacting to change of properties of the dielectric medium in real time because there is an opportunity of realization of optical contact between gas, liquid or firm dielectric object 33 and the surface of the second metal layer 25.

Besides, an additional dielectric basis 10 and the immersion optical layer 35 which is located between an additional dielectric basis 10 and an additional metal layer 25 can be placed. Thus, gaseous, liquid or firm dielectric object 33 can be placed on the surface of an additional dielectric basis 10. Such design allows to change easily the object of researching and to make measurements in the real time, including monitoring of change of an environment.

The electrooptical device shown on Fig.7, works as follows. In this case the device contains two electrooptical modulators 5. The exit side of the triangular prism of full internal reflection 11 of the first electrooptical modulator 5 is optically mating to an entrance side of the triangular prism of full internal reflection 11 of the second electrooptical modulator 5, and the exit side of this prism is located perpendicularly to the optical axis and directed to the side of a visualizer 16, and control device 6 of the first and second modulators 5 are made in the form of the uniform control block 26. When in both modulators there are no electric signals, the radiation 1 in the first modulator 5 due to surface plasmon resonance deviates from optical axis. When the part of radiation gets on the second modulator 5 then in this case also the radiation goes along a metal layer 2 and deviates from optical axis. Residual radiation after passage through the second modulator 5 is in addition is blocked by means of a visualizing diaphragm 17. Thus by means of this variant of the device it is possible to receive ultrahigh contrast. At submission of identical signals on equally oriented electrodes of electrode system 9 two variants of work of the device can be realized.

If change of amplitude of a relief leads to the angular deviations of radiation which leads to the infringement of conditions of occurrence of the surface plasmon resonance effect, then the radiation of the first and other maximum orders according to the relief information will be visualized in the form of gradation of brightness by means of the perception device 18. Thus contrast will increase proportionally to a square of its initial value. In the case if change of amplitude of a relief on the first and second electrooptical modulators 5 leads to the angular deviations of radiation providing existence of the surface plasmon resonance effect, for example, angle deviation is smaller than half of half-width of the angular resonance curve then differential effect of influence of electric signals on the interference fringe on the perception device 18 (either strengthening, or weakening) can be realized. When two modulator are working synchronously, at signal supply the the part of radiation of the zero order which has been not transformed to the higher order by means of the first modulator will be transformed by means of the second modulator.. It is one more method of the increase of contrast, and also expansion of a dynamic range of the declared electrooptical device.

If radiation 1 is directed under an angle at which conditions of existence of the surface plasmon effect is broken, then the whole radiation in absence of a signal will get in a visual analyzer 16. At signal switching on and at occurrence of a relief the incidence angle of radiation onto a metal layer 2 can be in the range $(\Theta \pm \Delta\Theta)$. The information about partial or full suppression of radiation 1 due to the surface plasmon resonance will be registered by the perception device 18. In this variant of so-called the «bright-field» projector the contrast will really be increased by means of a visualizing diaphragm 17.

It is known, that the «bright-field» optical schemes of a image projection have smaller contrast and a dynamic range, than «dark-field» optical schemes. In the offered invention this disadvantage is eliminated.

For reception of color images two illuminators 13 are additionally placed in the electrooptical device 5 containing one electrooptical modulator (Fig. 8a). The sources of radiation of the first, second and third illuminator 13 are made in the form of sources of radiation, accordingly, red R, green G, and blue B colour. The incidence angles of red $\alpha$R, green $\alpha$G and blue $\alpha$B radiation onto a deformable metal layer 2 are selected equal to resonance angles $\Theta$R, $\Theta$G and $\Theta$B of angular resonance curves for each of the radiation. The modulated radiation from red, green and blue illuminators 13 gets onto the system of dichroic mirrors 27. In the form of the colinear stream the radiation gets then on a visualizer 16 and the perception device 18. The control device 6 (on Fig. 8a it is not shown) is electrically connected to illuminators 13 and switches on red, green and blue radiation sources 14 synchronously with switching on the electrooptical modulator 5.

High contrast by the consecutive color transfer in comparison with known devices is reached by selectivity of the resonance angle for the same metal layer 2 working consistently at incidence radiation onto it with various length of a wave. This contrast can be more strengthened at use of the achromatic Fourier-objective 21 and a visualizing diaphragm 17.

In order to reduce the reflection loss of the radiation from an entrance side of a prism 20 the entrance side of the triangular prism of full internal reflection 11 of the electrooptical modulators can be located perpendicularly to a direction of transmission of one of colors radiation.

The electrooptical device which is shown on Fig.8b contains three electrooptical modulators 5, each of them contains the triangular prism of full internal reflection 11 as a substrate and three illuminators 13 are located additionally. Thus radiation sources 14 of the first, second and third illuminator 13 are made in the form, accordingly, of red R, green G and blue B colour of radiation sources. The electric signals corresponding the transmitted television or computer information are inputted in parallel onto modulators 5 corresponding to radiation of red, green and k blue colors. Signals are transformed to a relief of the surface of the metal layer 2. The incidence angles of optical radiation, accordingly, of red $\alpha$R, green $\alpha$G and blue $\alpha$B onto the metal layer 2 are equal, accordingly, to resonance angles $\Theta$R, $\Theta$G and $\Theta$B of angular resonance curves for each of electrooptical modulator 5. One triangular prism of full internal reflection 11 is used for all three electrooptical modulators 5. Before the visualizer 16 on an optical axis the system of dichroic mirrors 27 is pleced. Mirrors change a direction of radiation from all three sources of radiation 14 so that radiation passed in parallel optical axis to the visual analyzer 16. The control devices 6 of all electrooptical modulators 5 are made in the form of the synchronizer uniform block of control 26, which is electrically connected to each of radiation sources 14 of illuminator 13 and with each electrooptical modulator 5. By means of the synchronizer uniform block of control 26 the radiation sources 14 of red R, green G and blue B are switched synchronously with the electrooptical modulator 5 which corresponds to given color.

For reduction of reflection of radiation the matching detail 28 can be entered before the entrance side of the triangular prism of full internal reflection 11. The radiation from each of radiation sources 14 goes perpendicularly to its surface turned aside of sources of radiation. The surface of matching detail 28 turned to the side of the incident radiation 1 can be made either as cylindrical or as containing three sides, each of these sides is perpendicular to radiation of one of the radiation sources 14. The surface of the matching detail which turned to an entrance side of a prism 11 is made flat.

Besides, the visualizing diaphragm can be made in the form of a mirror 29 which is located under an angle to an optical axis. In that case, if in a phase plane of the Fourier-objective 21 where the mirror 29 is located, there is, for example, only the zero order of diffraction, then whole radiation is reflected from the mirror 29 and extends under the angle to the optical axis. This angle is defined by position of the mirror. If radiation in a phase plane is presented in the form of the higher orders, then the radiation gets on the collimating objective 15 and extends in the same direction. Besides, in the device the optical trap 30 can be placed, and the visualizing diaphragm made as a mirror 29 is located with an opportunity to direct the zero order of optical radiation to the optical trap 30. In this case the re-reflection of radiation is completely suppressed. Quality and contrast of the optical image is raised.

The electrooptical device shown on Fig.10, contains the pipeline 31, by one end connected with the gas volume or the tank with the dielectric liquid, and through the second end the gas or the dielectric liquid is supplied to the surface of the deformable metal layer 2 of electrooptical modulators 5. The control device 6 creates a running wave in the gap between electrode system 9 and the metal layer 2 by means of the electric signals inputted onto electrode system 9. Movement of a running wave pushes the gas or the dielectric liquid to the opposite end of the gap. In other words, running waves allow to create «pump effect» for movement of the dielectric medium in the gap between the electrode system 9 and the metal layer 2. Estimations show, that speed of a running wave is up 1 meter a second. The medium is completely regenerated in the gap of 2 centimeters long for 0.02 seconds. Due to changing of properties of an angular resonant curve at changing of properties of the dielectric medium (or occurrence of a new kind of the dielectric medium) the changing of these properties can be registered for specified time by means of the perception device 18. The offered variant of realization of the invention can be used as the high-sensitivity sensor, reacting to changing of properties of the dielectric medium in the real time.

The electrooptical device by the second variant, shown on Fig.11, works as follows. Three control devices 6 for each color are synchronized and operated by means of the color synchronizer 36. Three illuminators 13 and three electrooptical modulators 5, each of which contains the dielectric substrate in the form of the triangular prism of full internal reflection 11, are electrically connected to the control devices 6. The radiation modulated by the corresponding electrooptical modulator 5, gets on system of dichroic mirrors 27 then in a visual analyzer 16 and the perception device 18.

On electrode system 9 of the electrooptical modulators 5 for each color the electric signals from the each control device 6 are inputted. For suppression of noise the metal layer 2 of each electrooptical modulators 5 is electrically connected to the transparent electroconductive layer 8. Thickness and material of the metal layer 2 are chosen so that to produce the surface plasmon resonance effect in absence of the electric signal at the given length of the light wave. The angle of divergence of radiation from the corresponding illuminator 13 is selected less than half-width of the angular resonance curve of surface plasmon resonance effect. The incidence angle of radiation from the illuminator 13 onto the metal layer 2 in absence of an electric signal is selected equal to the resonance angle $\theta$ with a deviation from this angle, not exceeding half of half-width of the angular resonance curve. The incidence angle of radiation onto the metal layer 2 is changed due to occurrence of a relief at the electric signal supply from the corresponding control device 6 on the electrode system 9. These changes will be detected by the visualizer 16 and registered by the perception device 18.

The uniform design of the electrooptical modulator for three colors allows to simplify the design of the device, technology of its manufacturing and as consequence, to reduce the price of the color electrooptical device. High sensitivity, contrast and the resolution are combined with high efficiency of use of light radiation, for example, on the screen of the color projector. It is achieved first of all due to optimization of the form and depth of the relief for each color and parallel switching on three colors.

The visualizing diaphragm can be made in the form of the mirror 29 located under a angle to an optical axis because even at the high-quality of blacken of the visualizing diaphragm 29, the part of the radiation is dissipated. Use of the mirror visualizing diaphragm located under an angle to an optical axis, allows from the electrooptical device to take out the radiation blocked by a visualizing diaphragm. That raises quality of the transmitted information. Besides, the optical trap 30 can be placed in the electrooptical device, and the visualizing diaphragm can be located with an opportunity to direct the zero order of optical radiation to the optical trap 30. Advantage of this variant of the invention is the opportunity of transformation of light energy in thermal one without parasitic distribution of radiation.

The device under the present invention can be made, for example, as follows. The first dielectric deformable layer 3 can be made, for example, of the polyorgansiloxane gel, thickness 2-50 microns. Such gel is described, for example, in patent RU 2230348 C1, published. 10.06.2004. The second dielectric deformable layer 4 can also be made of gel, or be an air gap, thickness 2-50 microns. The metal layer 2 can be made of silver, gold or other metals. Thickness of this layer, for example, for gold can be 50 nanometers. The transparent dielectric substrate 7 and the dielectric basis 10 can be made of quartz glass. The transparent electroconductive layer 8 can be made of indium oxide. The single-layered or multilayered electrode system 9 can be made of gold, aluminium, chrome, molybdenum. Thickness of electrodes can be from several tenth parts of micron. As sources of radiation 14 a gas laser, a semi-conductor laser or other lasers can be used. For example, a helium-neon laser with wave length of 633 nanometers. As other elements and blocks the standard elements and blocks can be used. Optical parameters of details are calculated by known methods.

The calculation of the depth and the period of a relief is shown below as an example for a case when the metal layer 2 is made in the form of a film of gold by thickness of 50 nanometers and is placed on a surface of the first dielectric deformable layer 3, and as the second dielectric deformable layer 4 the air is chosen. It is assumed gel refraction coefficient is $n0=1.52$. In a condition "it is switched off" the beam ($\lambda = 0.633$ mkm) under the angle of the plasmon resonance falls on a film of gold and is absorbed (energy is transformed into plamons and dissipated). In a condition "it is switched on" the gel relief is created on the surface, and the film of gold traces the relief surface, and a condition of plasmon resonance is deranged - the power of the reflected beams is not equal 0.

The sinusoidal relief is described by the formula

$$d = A_0 \sin(2\pi x/\Lambda), \qquad\qquad (1)$$

Where d is the current height of the relief (the height of the unperturbed surface of gel is taken as zero);

x - current spatial coordinate;

$\Lambda$ - the period of the grating;

$A_0$- the maximal depth of modulation of a relief.

The steepness of relief $\gamma$ is determined under the formula:

$$\gamma = dA(x)/dx = (2\pi A_0/\Lambda) \cos(2\pi x/\Lambda), \qquad\qquad (2)$$

where A(x) - dependence of depth of modulation of a relief on current spatial coordinate.

The maximal steepness of a relief (the maximal angle of deviation from a flat surface):

$$\pm\gamma_m = \pm 2\pi\, A_0/\Lambda. \qquad\qquad (3)$$

Average steepness on a half-cycle (-A/4... A/4):

$$<\gamma> = \int_{-\Lambda/4}^{\Lambda/4} (2\pi\, A_0/\Lambda) \cos(2\pi x/\Lambda)dx \,/\, (\Lambda/2) = 4\, A_0/\Lambda = (2/\pi)\gamma_m. \quad (4)$$

At set $<\gamma>$ and $A_0$

$$\Lambda = 4\, A_0/<\gamma>\,. \qquad\qquad (5)$$

At $<\gamma> = 1° = 0.018$ radian and $A_0 = 0.4$ micron, thus $\Lambda = 89$ micron (11.3 line/mm) will be.

At set $<\gamma>$ и A

$$A_0 = <\gamma> \Lambda/4 \tag{6}$$

So, at $<\gamma> = 1° = 0.018$ radian and $\Lambda = 200$ micron (5 line/mm), $A_0 = \pm0.9$ mkm will be.

Spatial frequency of the gel relief can be chosen arbitrarily, and the depth of a relief should be changed proportionally according to (6.)

Thus the offered group of inventions provides the efficiency increase of the optical radiation control due to the opportunity of full deviation (switching) of radiation from the main optical axis at the switching on an input electrical signal. In other words, it is achieved the «valvate effect» at the control of optical radiation. It allows to increase sensitivity, contrast and the resolution of the processable optical information, due to a combination of advantages of the relief-phase record and the surface plasmon resonance effect. For the first time the opportunity of dynamic control by the surface plasmon resonance effect both in prismatic, and in grating variants is received. The offered method and the modulator can be used, in particular, in nanotechnology as the high-sensitivity sensor control reacting to change of properties of the dielectric medium in the real time.

Table 1

| Number | Kind of glass | n | $\alpha°$ (TIR) | $\theta°$ (SPR), $\lambda$ = 550nm | $\theta°$ (SPR), $\lambda$ = 633nm |
|---|---|---|---|---|---|
| 1 | ЛК1 (LK1) | 1.4414 | 43.93 | 49.5 | 46.7 |
| 2 | К8, К108 | 1.5183 | 41.20 | 46.5 | 43.6 |
| 3 | ТФ7 (TF7) | 1.7343 | 35.21 | 39.4 | 37.2 |
| 4 | ТФ5, ТФ105 (TF5, TF105) | 1.7617 | 34.59 | 38.5 | 36.5 |

Table 2

| Number | Kind of glass | N | $\lambda$ = 550 nm | $\lambda$ = 633nm |
|---|---|---|---|---|
| 1 | ЛК1 (LK1) | 1.4414 | | |
| 2 | К8, К108 | 1.5183 | | |

(continued)

| Number | Kind of glass | N | λ = 550 nm | λ = 633nm |
|--------|---------------|---|------------|-----------|
| 3 | Tφ7 (TF7) | 1.7343 | | |
| 4 | Tφ5, Tφ105 (TF5, TF105) | 1.7617 | | |

**Claims**

1. The method of modulation of the optical radiation in which the modulated optical radiation 1 is directed onto a surface of the metal layer 2 located on boundary surface between the first deformable dielectric layer 3 and the second deformable dielectric layer 4 with different or equal permittivity, and at least one of deformable dielectric layers is made transparent for the modulated optical radiation 1, and modulation of the optical radiation 1 is carried out by the variation of an incidence angle of the optical radiation 1 on a metal layer 2 due to deformation of a metal layer 2 as a result of influence of an external field on boundary surface, moreover, the modulated polarized optical radiation 1 is directed on a surface of a metal layer 2 under the incidence angle $\alpha$ providing occurrence of surface plasmon resonance effect, and deformation of a surface of a metal layer 2 is carried out thus, that the changing of the incidence angle $\alpha$ of the optical radiation 1 on a surface of a metal layer 2 provides infringement of conditions of occurrence of surface plasmon resonance effect.

2. The method according to claim 1, wherein for occurrence of surface plasmon resonance effect an incidence angle $\alpha$ of the modulated optical radiation 1 on the metal layer 2 equal to resonance angle $\Theta$, to corresponding minimum of an angular resonance curve, with a deviation from this angle, not exceeding half of half-width $\Delta\Theta$ of the angular resonance curve is provided.

3. The method according to claim 1, wherein for infringement of conditions of occurrence of surface plasmon resonance effect the incidence angle $\alpha$ of the modulated optical radiation 1 to a metal layer 2 is changed so that incidence angle was outside of a range of angles ($\Theta \pm \Delta\Theta$).

4. The method according to any claims 1-3, wherein the modulated optical radiation 1 is directed on a surface of a deformable metal layer 2 from the first deformable dielectric layer 3 which is made transparent, or from the second deformable layer 4 which is made transparent.

5. The method according to any claims 1-3, wherein as the external field influencing upon a metal layer 2 is used, for example, a modulated electric field.

6. The method according to claims 1-3, wherein as the second dielectric layer is used the gaseous or liquid dielectric medium, for example, air.

7. The electrooptical modulator is made with an opportunity of change of a direction of distribution of the modulated optical radiation 1, contains the control device 6 and also the electroconductive layer 8, the first deformable dielectric layer 3, the deformable metal layer 2, the second deformable dielectric layer 4, the electrode system 9 and the dielectric basis 10, which are located consistently on dielectric substrate 7 and contacting among themselves, in addition the electrode system 9, the deformable metal layer 2 and the electroconductive layer 8 are connected electrically to the control device 6, and the dielectric substrate 7, the electroconductive layer 8, the first deformable dielectric layer 3 are made transparent for used optical radiation, and/or a dielectric basis 10, the electrode system 9, the second deformable dielectric layer 4 are made transparent for the used optical radiation 1, and the electrooptical modulator 5 is made with an opportunity of excitation of surface plasmon resonance effect at falling the modulated optical radiation 1 onto the deformable metal layer 2 under the angle $\alpha$ providing occurrence of surface plasmon resonance effect for the given electrooptical modulator 5, and with an opportunity of the termination of surface plasmon resonance effect due to change of an incidence angle of the modulated optical radiation 1 onto the deformable metal layer 2 as a result of deformation of a metal layer 2 due to change of the electric signal inputted onto the electrode system 9 from control device 6.

8. The electrooptical modulator according to claim 7, wherein the dielectric substrate 7, the electroconductive layer 8 and the first dielectric layer 3 are made transparent, and as the specified transparent dielectric substrate 7 the triangular prism of full internal reflection 11 is used, thus the specified electroconductive layer 8 is located on the second side of the prism on a course of the modulated optical radiation 1.

9. The electrooptical modulator according to claim 7, wherein the dielectric basis 10, the electrode system 9, the second dielectric layer 4 are made transparent, and as the specified transparent dielectric basis 10 the triangular prism of full internal reflection 11 is used, and the electrode system 9 is located on the second side of the prism on a course of the modulated optical radiation 1.

10. The electrooptical modulator according to any claims 7-9, wherein as the second dielectric layer the gaseous or liquid dielectric medium is used, for example, air.

11. The electrooptical modulator is made with an opportunity of change of direction of the modulated optical radiation 1, contains the control device 6 and also contains the first deformable dielectric layer 3, the deformable metal layer 2 and the second deformable dielectric layer 4 which are contacting between themselves and located on the dielectric substrate 7, and the electrode system 9 is located on a surface of the dielectric substrate 7 and contacted with the first deformable dielectric layer 3, and the dielectric substrate 7, the electrode system 9, the first deformable dielectric layer 3 are made transparent for used optical radiation 1, and-or the second deformable dielectric layer 4 (12) is made transparent for used optical radiation 1, and the electrode system 9 and the metal layer 2 are connected electrically to the control device 6, and the electrooptical modulator 5 is made with an opportunity of occurrence or termination of the surface plasmon resonance effect at the falling of the modulated optical radiation 1 under angle $\alpha$ on a deformable metal layer 2, due to the changing of this incidence angle $\alpha$ of modulated optical radiation 1 onto the deformable metal layer 2 as a result of deformation of the metal layer 2 due to the changing of the electric signal inputted onto the electrode system 9 from the control device 6.

12. The electrooptical modulator according to claim 11, wherein a dielectric substrate 7, the electrode system 9 and the first deformable dielectric layer 3 are made transparent, and as a transparent dielectric substrate the triangular prism of full internal reflection 11 is used, and the specified electrode system 9 is located on the second side of prism on a course of the modulated optical radiation 1.

13. The electrooptical modulator according to claim 11, wherein the dielectric substrate 7, the electrode system 9 and the first deformable dielectric layer 3 are made transparent, and as the specified transparent dielectric substrate the flat-convex lens is used, and the specified electrode system 9 is located on its flat surface.

14. The electrooptical modulator according to claim 11, wherein the dielectric substrate 7, the electrode system 9 and the first deformable dielectric layer 3 are made transparent, and in the electrooptical modulator the dielectric basis 10 is added, for example, in the form of a flat-parallel plate which is covered by an electroconductive layer 8 from the side turned to the deformable metal layer 2, and the space between the electroconductive layer 8 and the deformable metal layer 2 is filled by the second deformable dielectric layer 4, and the electroconductive layer 8 is connected electrically to the control device 6.

15. The electrooptical modulator according to any claims 11-14, wherein as the second dielectric layer the gaseous or liquid dielectric medium is used, for example, air.

16. The electrooptical device contains the illuminator 13 including the radiation source 14 and the collimating objective 15, and also at least one electrooptical modulator 5, the visualizer 16 containing the visualizing diaphragm 17 and the perception device 18 which are located on optical axis consistently, and also the polarizer 19 is added in illuminator 13, and as each of electrooptical modulators 5 the electrooptical modulator according to any of claims 7-15 is used.

17. The electrooptical device according to claim 16, wherein in the illuminator 13 the first quarter wave plate 20 is entered, and in a the visualizer 16 the second polarizer 19, the second quarter wave plate 20 and a Fourier-objective which are located consistently on an optical axis 21 are entered, and the visualizing diaphragm 17 is located in a focal plane of Fourier-objective 21, and the perception device 18 contains the objective 22, the analyzer of quality of wave front 23 and the detector 24, and the detector 24 and the analyzer of wave front 23 electrically are connected with the control device 6 of the electrooptical modulators 5, and the specified control device 6 is made with an opportunity of correction of amplitude and a phase of wave front of the modulated optical radiation 1.

18. The electrooptical device according to claim 17, wherein the electrooptical device contains one electrooptical modulator 5 is made according to claims 8 or 12, and the additional triangular prism of full internal reflection 11 is placed, and its entrance side is optically mating to an exit side of triangular prism of full internal reflection 11 of electrooptical modulators 5, the exit side is turned to the visualizer 16, and on its second on a course of optical radiation side the additional metal layer 25 is located, and an angle between an optical axis and a perpendicular to the second side of an additional triangular prism 11 is equal to a resonance angle $\theta$ of surface plasmon resonance effect for an additional metal layer 25 and light wavelength of the illuminator 13.

19. The electrooptical device according to claim 17, wherein the electrooptical device contains two electrooptical modulators 5, each of which is made according to claim 8 or claim 12, and an exit side of the triangular prism of full internal reflection 11 of the first electrooptical modulator 5 is optically mating to an entrance side of the triangular prism of full internal reflection 11 of the second electrooptical modulator 5, and the exit side of this prism is located perpendicularly to the optical axis and directed to the side of a visualizer 16, and control device 6 of the first and second modulators 5 are made in the form of the uniform control block 26.

20. The electrooptical device according to claim 16, wherein the electrooptical device contains one electrooptical modulator 5, and two illuminators 13 are additionally placed, thus sources of radiation of the first, second and third illuminator 13 are made in the form of sources of radiation, accordingly, red R, green G, and blue B colour, and incidence angles of red $\alpha$R, green $\alpha$G and blue $\alpha$B radiation onto a deformable metal layer 2 of electrooptical modulators are equal, accordingly, to resonance angles $\theta$R, $\theta$G and $\theta$B of angular resonance curves for each of the specified radiation with a deviation from these angles not exceeding half of half-width corresponding to the angular resonance curve, and the electrooptical modulator 5 is made according to claim 8 or claim 12, and before the visualizer 16 on an optical axis the system of dichroic mirrors 27 which is made with an opportunity of a direction of radiation from all three radiation sources 14 in parallel optical axes to the visualizer 16 is located, and the control device 6 of the electrooptical modulator is electrically connected to each of the radiation source 14 of the illuminator 13 and made with an opportunity of consecutive switching on of red, green and blue radiation sources 14 synchronously with switching on of the electrooptical modulator 5.

21. The electrooptical device according to claim 20 wherein the entrance side of the triangular prism of full internal reflection 11 of the electrooptical modulator is located perpendicularly to a direction of one colour radiation.

22. The electrooptical device according to claim 16 wherein the electrooptical device contains three electrooptical modulators 5, each of which is made according to claim 8 or claim 12, and additionally two illuminators 13 are placed, and radiation sources 14 of the first, second and third illuminator 13 are made in the form, accordingly, of radiation sources of red R, green G and blue B colour, and incidence angles of radiation, accordingly, of red $\alpha$R, green $\alpha$G and blue $\alpha$B onto the metal layer 2 of the corresponding electrooptical modulator 5 are equal, accordingly, to resonance angles $\theta$R, $\theta$G and $\theta$B of angular resonance curves for each of electrooptical modulator 5 with a deviation from these angles, not exceeding half of half-width of corresponding angular resonance curve, and for all three electrooptical modulators 5 one triangular prism of full internal reflection is used, and before the visualizer 16 on an optical axis the system of dichroic mirrors 27 made with an opportunity of a direction of radiation from all three radiation sources 14 in parallel to optical axis to the visualizer 16 is placed, and the control devices 6 of all electrooptical modulators 5 are made in the form of the uniform block of control 26 which is electrically connected to each of radiation sources and with each electrooptical modulator 5 and is made with an opportunity of parallel switching on of red R, green G and blue B radiation sources synchronously with switching on of the electrooptical modulator 5 corresponding given colour.

23. The electrooptical device according to claim 20 or claim 21 wherein the matching element 28 is located before an entrance side of the triangular prism of full internal reflection of the electrooptical modulator and made so that radiation from each of the radiation sources falls perpendicularly to its surface turned to the side of the radiation sources.

24. The electrooptical device according to claim 23 wherein a surface of matching detail 28 turned to the side of incoming radiation is made either as cylindrical or as containing three sides, each of which is perpendicular to radiation of one of the radiation sources 14, and a surface of the matching detail 28, turned to an entrance side of a prism, is made flat.

25. The electrooptical device according to claim 16 wherein the visualizing diaphragm is made in the form of a mirror located under an angle to an optical axis.

26. The electrooptical device according to claim 25 wherein the optical trap is placed, and the visualizing diaphragm is located with an opportunity to direct the zero order of optical radiation to the optical trap.

27. The electrooptical device according to claim 16 wherein the electrooptical device contains the electrooptical modulator 5 according claim 8, and as the second deformable dielectric layer the dielectric medium 12 is used which contacts with the deformable metal layer 2 and which is gas or dielectric liquid, and the pipeline 31 is placed which connected by the first end with volume 32 of gas or a dielectric liquid and made with an opportunity of supplying of gas or a dielectric liquid through the second end to a surface of the deformable metal layer 2 of electrooptical modulators 5, and the control device 6 is made with an opportunity of supply of electric signals to the electrode system 9 of electrooptical modulator 5, and electrical signals provide in gas or a dielectric liquid the creation of the running wave, directed from the second end of the pipeline 31 to a hole located in the opposite side of the electrooptical modulator 5.

28. The electrooptical device according to claim 18 is made with an opportunity to place gaseous, liquid or firm dielectric object 33 on a surface of an additional metal layer 25, and the device of synchronization 34 is entered, and the detector 24 of the perception device 18 is electrically connected to the control device 6 of electrooptical modulators 5 through the entered the synchronization device 34.

29. The electrooptical device according to claim 18 wherein the electrooptical device contains the electrooptical modulator according claim 8 or claim 12, and the additional triangular prism of full internal reflection is placed, and its entrance side is optically mating to an exit of the triangular prism of full internal reflection of electrooptical modulators, and the exit side is turned to the visualizer, and on its second side on a course of optical radiation the additional metal layer is placed, and an angle between an optical axis and a perpendicular to the second side of an additional triangular prism is equal to a resonance angle θ of surface plasmon resonance effect for an additional metal layer and light wavelength of the illuminator, and an additional dielectric basis and the immersion optical layer 35 which is located between an additional dielectric basis and an additional metal layer are placed, and the electrooptical device is made with an opportunity to place gaseous, liquid or firm dielectric object on a surface of an additional dielectric basis.

30. The electrooptical device contains three electrooptical modulators 5, each of them is made according to claim 8 or claim 12, and the control device 6 of each electrooptical modulator 5 is connected to the colour synchronizer 36, and also three illuminator 13 each of them contains source of radiation red R, green G and blue B colour accordingly, the system of dichroic mirrors 27, the visualizer 16 containing at least visualizing diaphragm 17 and the perception device 18, and incidence angles of radiation accordingly of red $\alpha R$, green $\alpha G$ and blue $\alpha B$ colour to the deformable metal layer 2 of corresponding modulator 5 are equal to the resonance angles $\Theta R$, $\Theta G$ and $\Theta B$ of angular resonance curves for each modulator accordingly, with a deviation from this angle, not exceeding half of half-width $\Delta\Theta R$, $\Delta\Theta G$ и $\Delta\Theta B$ of the corresponding angular resonance curve, and each control device 6 is made with an opportunity of supply to the electrode system 9 of corresponding modulators 5 the electric signals which causes the deformation of a metal layer 2 and causes the changing of corresponding incidence angle $\alpha R$, $\alpha G$ and $\alpha B$ by an amount leading to the termination of superficially of surface-plasmon resonance effect, and each of control device 6 electrically is connected to the corresponding illuminator 13, and the entrance sides of the triangular prism of full internal reflection 11 are located perpendicularly to radiation of the corresponding illuminator 13, and exit sides are turned to the side of the system of dichroic mirrors 27, made with an opportunity of a direction of the modulated each of colour radiation in parallel to the optical axis to the visualizer 16.

31. The electrooptical device according to claim 30 wherein the visualizing diaphragm 29 is made in the form of a mirror located under an angle to the optical axis.

32. The electrooptical device according to claim 31 wherein the optical trap 30 is placed, and the visualizing diaphragm 29 is located with an opportunity to send the optical radiation of the zero order to the optical trap 30.

Fig.1

Fig. 2

Fig. 3

Fig.4

Fig.5

Fig. 6

Fig. 7

Fig. 8

Fig. 9

Fig. 10

Fig. 11

## INTERNATIONAL SEARCH REPORT

| | International application No. |
|---|---|
| | PCT/RU 2005/000090 |

**A.    CLASSIFICATION OF SUBJECT MATTER**

*G02F 1/015*  (2006.01)
*G02B 26/00*  (2006.01)

According to International Patent Classification (IPC) or to both national classification and IPC

**B.    FIELDS SEARCHED**

Minimum documentation searched (classification system followed by classification symbols)

G02B 26/00-26/08, G02F 1/00-1/335, H04N 5/30, 5/74

Documentation searched other than minimum documentation to the extent that such documents are included in the fields searched

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | **RU 2143127 C1 (DEBBEDZH RED KHASSAN) 20.12.1999** | 1-32 |
| A | JP 63223614 A (NIPPON ELECTRIC CO) 19.09.1988 | 1-32 |
| A | EP 0365766 A2 (INTERNATIONAL BUSINESS MACHINES CORPORATION) 02.05.1990 | 1-32 |
| A | **RU 94028128 A1 (NIL LAZERNOI FIZIKI- VSEROSSIISKII NAUCHNII TSENTR GODUDARSTVENII OPTICHESKII INSTITUT IM.S.I. VAVILOVA) 10.05.1996** | 1-32 |

☐  Further documents are listed in the continuation of Box C.          ☐  See patent family annex.

| *    Special categories of cited documents: | "T"  later document published after the international filing date or priority date and not in conflict with the application but cited to understand the principle or theory underlying the invention |
|---|---|
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **03 November 2005 (03.11.2005)** | **24 November 2005 (24.11.2005)** |
| Name and mailing address of the ISA/ | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- RU 2230348 C1
- RU 2143127 C1

- WO 0148531 A2

### Non-patent literature cited in the description

- **KRETSCHMANN E.** *Zs. Phys.,* 1971, vol. 241, 313
- **OTTO A.** *Zs. Phys.,* 1968, vol. 216, 398

- **SCHUK P.** *Ann. Rev. Biohysics Biomolec. Structures,* 1997, vol. 26, 541
- **V.E.KOCHERGIN.** *Quantum electronics,* 1998, vol. 25 (9), 857-861